(19) Europäisches Patentamt / European Patent Office / Office européen des brevets

(11) **EP 1 940 942 B1**

(12) **EUROPEAN PATENT SPECIFICATION**

(45) Date of publication and mention of the grant of the patent:
**30.09.2009 Bulletin 2009/40**

(21) Application number: **06801927.2**

(22) Date of filing: **18.08.2006**

(51) Int Cl.:
*C08L 23/08* (2006.01)          *C08L 23/06* (2006.01)

(86) International application number:
**PCT/US2006/032462**

(87) International publication number:
**WO 2007/024746 (01.03.2007 Gazette 2007/09)**

(54) **POLYOLEFIN COMPOSITIONS, ARTICLES MADE THEREFROM AND METHODS FOR PREPARING THE SAME**

POLYOLEFINVERBINDUNGEN, DARAUS HERGESTELLTE ARTIKEL UND HERSTELLUNGSVERFAHREN DAFÜR

COMPOSITIONS DE POLYOLEFINES, ARTICLES REALISES A PARTIR DES CES COMPOSITIONS, ET PROCEDES POUR LES PREPARER

(84) Designated Contracting States:
**AT BE BG CH CY CZ DE DK EE ES FI FR GB GR HU IE IS IT LI LT LU LV MC NL PL PT RO SE SI SK TR**

(30) Priority: **24.08.2005 US 711283 P**

(43) Date of publication of application:
**09.07.2008 Bulletin 2008/28**

(73) Proprietor: **DOW GLOBAL TECHNOLOGIES INC.**
**Midland MI 48674 (US)**

(72) Inventors:
• **SHAN, Li, Pi**
  **Pearland, TX 77584 (US)**
• **KAPUR, Mridula (Babli)**
  **Lake Jackson, TX 77566 (US)**
• **COSTEUX, Stephane**
  **Midland, Michigan 48640 (US)**
• **GILLESPIE, David, T.**
  **Pearland, TX 77584 (US)**

(74) Representative: **Raynor, John**
**Beck Greener**
**Fulwood House**
**12 Fulwood Place**
**London**
**WC1V 6HR (GB)**

(56) References cited:
**EP-A- 1 319 685          US-A1- 2003 055 176**
**US-B1- 6 194 520**

**Description**

BACKGROUND OF THE INVENTION

The invention relates to ethylene polymer compositions for the fabrication of high density ethylene polymerproducts, such as blow molded single and multi-layer bottles and containers, fabricated and molded fittings and accessories, and other high density polyethylene (HDPE) products The compositions provide enhanced processing properties, such as reduced bottle weights (as it relates to a decrease in extrudate or die swell), and enhanced physical properties, such as improved environmental stress crack resistance, while maintaining high bottle top-load bearing capacity.

Blow molding products, such as household and industrial containers (for example, plastic food bottles for milk, juice, and water; chemical bottles for detergent and motor oil; and heavy-duty storage drums) have high performance and appearance standards. Blow molding products are typically formed using existing commercial equipment and existing blow molding processing techniques, with no, or minimal, equipment modifications. In addition, fabricators seek to minimize the cycle time to - produce a product, and thus increased cycle times are disfavored. Customer requirements for blow molding resins include product consistency, good processability, adequate resin swell, and an optimum balance of top load (stiffness, modulus) and environmental stress crack resistance (ESCR). Blow molding resins can be blended with one or more "drop-in" resins, used to improve one or more of the above properties.

Polymers for use in blow molding products, accordingly, must meet the constraints established by the fabricators of blow molding products. Acceptable polymers for blow molding, generally must exhibit good melt strength, no melt fracture, and die swell within the constraints of fabricator's equipment. Polymers having a relatively broad molecular weight distribution (MWD or Mw/Mn, where Mw is the weight average molecular weight of the polymer, and Mn is the number average molecular weight of the polymer), in general, have higher melt strengths. For ethylene based polymers, the molecular weight distribution of the resin is dependent of the catalysts and process technology used in the polymerization process.

Meeting die swell constraints established by the bottle fabricator is very critical. If the swell is too high, generally the bottle weight increases. To counter the increase in bottle weight, changes to the fabrication conditions, such as narrowing the die gap, are made, which in turn, can lead to excessive flash and trimming problems. If the die swell is too low, additional features, such as side handles on a container, cannot be formed. The chromium (or "chrome") catalyzed polymers used to produce blow molded articles, often exhibit, or possess, high swell properties.

The term "die swell," as used herein, refers to the expansion of a free form parison (or annular tube of molten plastic) upon exit from any die geometry (convergent, divergent, straight, etc.), after the molten precursor resin has been delivered under pressure to the die, by means of a conventional plasticating extruder. This expansion of the free form parison occurs in two dimensions, (a) radially, to increase the thickness of the parison, and (b) circumferentially, to increase the diameter of the parison. The radial swell correlates with the circumferential swell for each class of blow molding resins. Radial swell is generally measured by comparing bottle weights under controlled conditions. Circumferential swell, which takes more time to determine, is usually measured by comparing the width of the trim on the bottle. Since radial swell correlates with circumferential swell for each class of blow molding resins, bottle weight, which is a simpler and more reproducible test, is generally used to measure and control die swell during resin manufacture. Resin swell, in general, depends on the stability of the resin in molten form and on the molecular weight distribution of the resin. High intrinsic swell, resulting from the molecular structure of the resin, gives heavy parison, and thus heavy bottles. Since the current trend in industry is towards light-weight bottles, it is necessary to accurately control the parison diameter and thickness in blow molded bottles.

Environmental stress crack resistance (ESCR) is a measure of the resistance of the container to the internal pressure and chemical interaction of the contained goods. Poor environmental stress crack resistance of high density ethylene polymer, blow molded articles, such as blow molded containers for household and industrial goods, has impeded the use of these containers for such goods. Due to insufficient ESCR, blow molded containers, fabricated from high-density ethylene polymer, may crack before or during storage. Structural features that will affect the ESCR, include molecular weight distribution, comonomer distribution, the percent crystallinity, which will influence the amount of tie chains, which strengthen the crystal lamellae.

For small part blow molding applications, previous attempts to improve resin ESCR have consisted of increasing the resin comonomer content and/or increasing the high molecular weight content of the resin. However, although an improved ESCR was observed using these approaches, an increase in comonomer content resulted in a decrease in resin modulus (top load), and an increase in the high molecular weight content resulted in an increase in resin swell. There is need for a polyethylene-base composition that has low die swell, and can be used to form blow molded articles that have high ESCR and good top load properties.

European Patent Application, EP1319685A discloses a process for the preparation of polyethylene resins having a multimodal molecular weight distribution that comprises the steps of: (i) providing a first high molecular weight metallocene-produced linear low density polyethylene (mLLDPE) resin having a density from 0.920 to 0.940 g/cc and a HLMI of from 0.05 to 2 g/10 min; (ii) providing a second high density polyethylene (HDPE) prepared either with a Ziegler-Natta or with a chromium based catalyst, said polyethylene having a density ranging from 0.950 to 0.970 g/cm$^3$, and a HLMI (high load melt index) from 5 to 100 g/10 min; (iii) physically blending together the first and second polyethylenes to form a polyethylene resin having a semi-high molecular weight, a broad or multimodal molecular weight distribution, a density ranging from 0.948 to 0.958 g/cm$^3$, and a HLMI less than 20 g/10 min.

International Publication No. WO 00/15671 discloses a polymer composition comprising an ethylene homopolymer, or an interpolymer of ethylene and at least one compound represented by the formula $H_2C = CHR$; wherein R is a C1-C20 linear, branched or cyclic alkyl group or a C6-C20 aryl group, or a C4-C20 linear, branched or cyclic diene. The polymer composition is characterized as having a percent swell of at least 175 percent, a monomodal molecular weight distribution, and an Mw/Mn from 1.5 to 10.

Japanese Patent Application KokiaNo. H11-302465, discloses a polyethylene resin composition, which has a relatively high molecular weight, and a wide molecular weight distribution. This composition is described as having an excellent environmental stress crack resistance, and excellent balance in forming ability, such as draw down resistance, melt tension and swell, and is described as well suited for large scale blow molding. This reference discloses a polyethylene resin composition comprises of (1) 15-95 weight parts of an ethylenic polymer, which is obtained by polymerization using a complex chromium catalyst, and which has a HLMFR (high load melt flow rate) from 0.01 to 100 g/10 min, and a density from 0.920 to 0.980 g/cc, and a Mw/Mn from 10 to 80, and (2) 85-5 weight parts of an ethylenic polymer, which is obtained by polymerization using a Ziegler catalyst, and that has a HLMFR from 0.1 to 1000 g/10 min, and a density from 0.900 to 0.980 g/cc.

U.S. Patent 6,242,543 discloses a process for the polymerization of ethylene and optionally α-olefins, to form ethylene homopolymer or copolymers, having a broad molecular weight distribution, comprising polymerization of 100 to 80 weight percent of ethylene, and zero to 20 weight percent of comonomer, in the presence of two independent, simultaneously present catalysts A and B, wherein catalyst A, deposited on an inorganic support, comprises chromium in a predominantly oxidant state of 2, and catalyst B comprises a bis-cyclopentadienyl chromium compound, reacted with an inorganic support.

U.S. Patent 5,350,807 discloses a composition comprising (1) a narrow molecular weight distribution component, having an Mw/Mn in the range of 1.0 to 2.0, and a weight average molecular weight in the range of 500 to 7,500 comprising an ethylene homopolymer; and (2) a broad molecular weight distribution component having an Mw/Mn greater than, or equal, to about 3.0 and a weight average molecular weight in the range of 100,000 to 750,000, comprising an ethylene copolymer. The narrow molecular weight distribution component is present in the polymer composition in an amount of at least about 10 weight percent, as based on the total weight of the polymer composition. In another embodiment, the narrow molecular weight distribution component further comprises an ethylene/hexene copolymer.

European Patent EP 1187876B1 discloses the use in injection molding or extrusion coating of a HDPE having a density of 950 to 980 kg/m$^3$, and a crystallinity of 60 to 90 percent, comprising at least two polyethylene components having different molecular weight distributions, and wherein at least one of said components is an ethylene copolymer. In a further embodiment, the HDPE has the following characteristics: MFR2 of from 2 to 100; mean weight average molecular weight of from 80 to 200 kD; MWD of from 5 to 100; weight average molecular weight of a low molecular weight fraction of 20 to 40 kD; weight average molecular weight of a high molecular weight fraction of 150 to 400 kD; weight ratio of said low molecular weight fraction to said high molecular weight fraction of 10:90 to 90;10; a melting point 120°C to 140°C; a density 950 to 980 kg/m$^3$; a comonomer content 0.2 to 10 percent by weight; and a crystallinity 60 to 90 percent.

U.S. Patent 6,426,385 discloses a resin composition containing: (A) an ethylene-α-olefin copolymer having a melt flow rate from 0.5 to 100 g/10 min, a density of from 860 to 920 kg/m$^3$, and a highest melting peak temperature of from 50°C to 110°C; (B) an ethylene homopolymer or ethylene-α-olefin copolymer having a melt flow rate of from 0.5 to 100 g/10 min, a density of from 910 to 980 kg/m$^3$, and a highest melting peak temperature of from 110°C to 135°C; and (C) a low-density polyethylene having a melt flow rate of from 0.5 to 100 g/10 min; and a swell ratio of from 1.3 to 2.0. The composition provides a molded article superior in mold release properties, flexibility and heat resistance, particularly when used in injection molding.

Additional polyethylene compositions are disclosed in European Patent EP 0783022B1; European Patent EP 1141045B1; European Patent EP 1204523B1; European Patent EP 0876,406B1; European Patent Application EP 1304353A1; International Publication No. WO 00/71615; International Publication No. WO 94/07930; International Publication No. WO 00/18814; International Publication No. WO 03/020821; International Publication No. WO 03/016396; U.S. Patent 6,841,631; U.S. Patent 6,787,608; U.S. Patent 5,408,015; U.S. Patent 6,632,896; U.S. Application No. 2004/0048736; U.S. Application No. 2004/0167015; U.S. Application No. 2004/0242808; and U.S. Application No. 2004/0249083;

However, these references do not disclose compositions that provide an optimized balance of high top load, low die swell (or low bottle weight) and high ESCR. There is a need for compositions that provide such balanced properties. This need is particularly pronounced in the fabrication of blow molded household and industrial containers, and especially in the area of reduced resin, light-weight rigid containers. These and other issues are satisfied by the following invention.

SUMMARY OF THE INVENTION

A modification in a base resin structure has been found that results in both low resin swelling and increased ESCR. Further modifications in the base resin also increase resin density. Such modification is achieved by selectively increasing the high molecular weight tail (as determined by Gel Permeation Chromatography, GPC) of the resin. For example, by blending a high molecular weight ethylene-based polymer, which has a narrow molecular weight distribution, into a base polymer consisting of a high density ethylene-based polymer, with a broad molecular weight distribution, the swell characteristics of the final resin can be maintained or decreased. It is also possible to design resins with specific properties by adjusting the amount of high molecular weight polymer and/or adjusting the comonomer content of one or more components of the resin blend. The compositions of the invention are contrary to conventional compositions that show an increase in final resin swell characteristics upon the addition of certain types of high molecular weight components. Inventive blends that have been solution blended show a good balance of stiffness, ESCR and swell.

Accordingly, the invention provides compositions for blow molding applications and other applications, where such compositions comprise a high density ethylene polymer and a high molecular weight ethylene polymer. In these compositions, the high density ethylene polymer has a density greater than the density of the high molecular weight ethylene polymer, and the high molecular weight ethylene polymer has a weight average molecular weight greater than the weight average molecular weight of the high density ethylene polymer. Also, the high density ethylene polymer has a density from 0.94 $g/cm^3$ to 0.98 $g/cm^3$, and a molecular weight distribution, (Mw/Mn), greater than 8, and the high molecular weight ethylene polymer has a weight average molecular weight greater than 200,000 g/mole, and a molecular weight ratio, Mz/Mw (Mz is the "z-average" molecular weight), less than 5.

The average molecular weights, Mn, Mw and Mz, are further defined, below, in the section on "Test Procedures."

The invention also provides a composition comprising a high density ethylene polymer and a high molecular weight ethylene polymer, and wherein

the high density ethylene polymer has a density greater than the density of the high molecular weight ethylene polymer, and

the high molecular weight ethylene polymer has a weight average molecular weight greater than the weight average molecular weight of the high density ethylene polymer, and

wherein the high density ethylene polymer has a density from 0.94 $g/cm^3$ to 0.98 $g/cm^3$, and a molecular weight distribution, Mw/Mn, greater than 8, and

the high molecular weight ethylene polymer has a weight average molecular weight greater than 200,000 g/mole, and a molecular weight ratio, Mz/MW, less than 5, and where the composition has a high load melt index, HLMI, greater than 20.

The invention also provides a composition comprising a high density ethylene polymer and a high molecular weight ethylene polymer, and wherein

the high density ethylene polymer has a density greater than the density of the high molecular weight ethylene polymer, and

the high molecular weight ethylene polymer has a weight average molecular weight greater than the weight average molecular weight of the high density ethylene polymer, and

wherein the high density ethylene polymer has a density from 0.94 $g/cm^3$ to 0.98 $g/cm^3$, and a molecular weight distribution, Mw/Mn, greater than 8, and

the high molecular weight ethylene polymer has a weight average molecular weight greater than 200,000 g/mole, and a molecular weight ratio, Mz/Mw, from 1.2 to 5.

The invention also provides a composition comprising a high density ethylene polymer and a high molecular weight ethylene polymer, and wherein

the high density ethylene polymer has a density greater than the density of the high molecular weight ethylene polymer, and

the high molecular weight ethylene polymer has a weight average molecular weight greater than the weight average molecular weight of the high density ethylene polymer, and

wherein the high density ethylene polymer has a density from 0.94 $g/cm^3$ to 0.98 $g/cm^3$, and a molecular weight distribution, Mw/Mn, greater than 8, and

the high molecular weight ethylene polymer has a weight average molecular weight greater than 200,000 g/mole, and a molecular weight ratio, Mz/Mw, less than 5, and

wherein the high molecular weight ethylene polymer has long chain branching.

The invention also provides a composition comprising a high density ethylene polymer and a high molecular weight ethylene polymer, and wherein

the high density ethylene polymer has a density greater than the density of the high molecular weight ethylene polymer, and

the high molecular weight ethylene polymer has a weight average molecular weight greater than the weight average molecular weight of the high density ethylene polymer, and

wherein the high density ethylene polymer has a density from 0.94 g/cm$^3$ to 0.98 g/cm$^3$, and a molecular weight distribution, Mw/Mn, greater than 8, and

the high molecular weight ethylene polymer has a weight average molecular weight greater than 200,000 g/mole, and a molecular weight ratio, Nz/Mw, less than 5, and

wherein the high density ethylene polymer and the high molecular weight ethylene polymer are both ethylene/$\alpha$-olefin interpolymers, and each interpolymer independently contains 0.01 to 2 mole percent comonomer.

The invention also provides a composition comprising a high density ethylene polymer and a high molecular weight ethylene polymer, and wherein

the high density ethylene polymer has a density greater than the density of the high molecular weight ethylene polymer, and

the high molecular weight ethylene polymer has a weight average molecular weight greater than the weight average molecular weight of the high density ethylene polymer, and

wherein the high density ethylene polymer has a density from 0.94 g/cm$^3$ to 0.98 g/cm$^3$, and a molecular weight distribution, Mw/Mn, greater than 8, and

the high molecular weight ethylene polymer has a weight average molecular weight greater than 200,000 g/mole, and a molecular weight ratio, Mz/Mw, less than 5, and

wherein the high molecular weight ethylene polymer is present in an amount less than, or equal to, 15 weight percent, and wherein the high density ethylene polymer has a HLMI greater than, or equal to, 19, and a ratio, $I_{21}/I_2$ of greater than, or equal to, 70.

The invention also provides a composition comprising a high density ethylene polymer and a high molecular weight ethylene polymer, and wherein

the high density ethylene polymer has a density greater than the density of the high molecular weight ethylene polymer, and

the high molecular weight ethylene polymer has a weight average molecular weight greater than the weight average molecular weight of the high density ethylene polymer, and

wherein the high density ethylene polymer has a density from 0.94 g/cm$^{3\backslash}$ to 0.98 g/cm$^3$, and a molecular weight distribution, Mw/Mn, greater than 8, and

the high molecular weight ethylene polymer has a weight average molecular weight greater than 200,000 g/mole, and a molecular weight ratio, Mz/Mw, less than 5, and

wherein the high molecular weight ethylene polymer is present in an amount less than, or equal to, 15 weight percent, and wherein the high density ethylene polymer has an $I_2$ greater than, or equal to, 0.1 g/10 minutes; or greater than, or equal to, 0.2 g/10 minutes.

The invention also provides for a tri-component composition comprising the high density ethylene polymer component and the high molecular weight ethylene polymer component, as discussed above, and, in addition, a low molecular weight ethylene polymer or polyethylene wax.

The invention also provides for a composition comprising the high density ethylene polymer component, as discussed above, and the low molecular weight ethylene polymer or polyethylene wax.

Other polymers, such as, low molecular weight polypropylene homopolymers, copolymers and interpolymers, may be used in place of the low molecular weight ethylene polymer or polyethylene wax.

BRIEF DESCRIPTION OF THE DRAWINGS

Figure 1 depicts Gel Permeation Chromatography (GPC) profiles of four resins.

Figure 2 depicts GPC profiles of an ethylene-based resin and three resin compositions based on this resin.

Figure 3 is a bar graph representing the extrudate swell of a resin composition versus the amount of high molecular weight ethylene polymer in the composition.

Figure 4 depicts GPC profiles of an ethylene-based resin and three resin compositions based on this resin.

Figure 5 depicts GPC profiles of five resins.

Figure 6 depicts GPC profiles of an ethylene-based resin and two resin compositions based on this resin.

Figure 7 is a line plot representing the correlation of weight average molecular weight versus extrudate swell for the inventive resin compositions and conventional compositions.

Figure 8 is a plot of the molecular weight ratio, Mz/Mw, versus extrudate for several resins.

Figure 9 depicts a line correlation of the weight percentage of component (high MW component or wax component) and (a) the percent crystallinity of the resin composition, and (b) the estimated density of the resin composition. Figure 10 is a bar graph representation of the Notched Constant Ligament Stress (NCLS) average failure time versus the noted resin compositions, overlaid with a point representation of the extrudate swell of the noted resin compositions. The density for each resin composition is noted within the respective bar.

DETAILED DESCRIPTION OF THE INVENTION

The invention provides ethylene polymer compositions which can be used for making blow molded articles and other products. These resins simultaneously exhibit low swelling behavior and high ESCR. The new compositions comprise a high density ethylene polymer and a high molecular weight ethylene polymer. In these compositions, the high density ethylene polymer has a density greater than the density of the high molecular weight ethylene polymer, and the high molecular weight ethylene polymer has a weight average molecular weight greater than the weight average molecular weight of the high density ethylene polymer. Also, the high density ethylene polymer has a density from 0.94 $g/cm^3$ to 0.98 $g/cm^3$, and more preferably from 0.94 $g/cm^3$ to 0.97 $g/cm^3$, and a molecular weight distribution, Mw/Mn, greater than 8, and the high molecular weight ethylene polymer has a weight average molecular weight greater than 200,000 g/mole, and a molecular weight ratio, Mz/Mw, less than 5.

The invention also provides a composition comprising a high density ethylene polymer and a high molecular weight ethylene polymer, and wherein

the high density ethylene polymer has a density greater than the density of the high molecular weight ethylene polymer, and

the high molecular weight ethylene polymer has a weight average molecular weight greater than the weight average molecular weight of the high density ethylene polymer, and

wherein the high density ethylene polymer has a density from 094 $g/cm^3$ to 0.98 $g/cm^3$, and more preferably from 0.94 $g/cm^3$ to 0.97 $g/cm^3$, and a molecular weight distribution, Mw/Mn, greater than 8, and

the high molecular weight ethylene polymer has a weight average molecular weight greater than 200,000 g/mole, and a molecular weight ratio, Mz/Mw, less than 5, and where the composition has a high load melt index, HLMI, greater than 20.

The invention also provides a composition comprising a high density ethylene polymer and a high molecular weight ethylene polymer, and wherein

the high density ethylene polymer has a density greater than the density of the high molecular weight ethylene polymer, and

the high molecular weight ethylene polymer has a weight average molecular weight greater than the weight average molecular weight of the high density ethylene polymer, and

wherein the high density ethylene polymer has a density from 0.94 $g/cm^3$ to 0.98 $g/cm^3$, and more preferably from 0.94 $g/cm^3$ to 0.97 $g/cm^3$, and a molecular weight distribution, Mw/Mn, greater than 8, and

the high molecular weight ethylene polymer has a weight average molecular weight greater than 200,000 g/mole, and a molecular weight ratio, Mz/Mw, from 1.2 to 5.

The invention also provides a composition comprising a high density ethylene polymer and a high molecular weight ethylene polymer, and wherein

the high density ethylene polymer has a density greater than the density of the high molecular weight ethylene polymer, and

the high molecular weight ethylene polymer has a weight average molecular weight greater than the weight average molecular weight of the high density ethylene polymer, and

wherein the high density ethylene polymer has a density from 0.94 $g/cm^3$ to 0.98 $g/cm^3$, and more preferably from 0.94 $g/cm^3$ to 0.97 $g/cm^3$, and a molecular weight distribution, Mw/Mn, greater than 8, and

the high molecular weight ethylene polymer has a weight average molecular weight greater than 200,000 g/mole, and a molecular weight ratio, Mz/Mw, less than 5, and

wherein the high molecular weight ethylene polymer has long chain branching.

The invention also provides a composition comprising a high density ethylene polymer and a high molecular weight ethylene polymer, and wherein

the high density ethylene polymer has a density greater than the density of the high molecular weight ethylene polymer, and

the high molecular weight ethylene polymer has a weight average molecular weight greater than the weight average molecular weight of the high density ethylene polymer, and

wherein the high density ethylene polymer has a density from 0.94 $g/cm^3$ to 0.98 $g/cm^3$, and more preferably from 0.94 $g/cm^3$ to 0.97 $g/cm^3$, and a molecular weight distribution, Mw/Mn, greater than 8, and

the high molecular weight ethylene polymer has a weight average molecular weight greater than 200,000 g/mole, and a molecular weight ratio, Mz/Mw, less than 5, and

wherein the high density ethylene polymer and the high molecular weight ethylene polymer are both ethylene/α-olefin interpolymers, and each interpolymer independently contains from 0.01 to 2 mole percent comonomer, and preferably from 0.01 to 0.8 mole percent comonomer.

The invention also provides a composition comprising a high density ethylene polymer and a high molecular weight ethylene polymer, and wherein

the high density ethylene polymer has a density greater than the density of the high molecular weight ethylene polymer, and

the high molecular weight ethylene polymer has a weight average molecular weight greater than the weight average molecular weight of the high density ethylene polymer, and

wherein the high density ethylene polymer has a density from 0.94 $g/cm^3$. to 0.98 $g/cm^3$, and more preferably from 0.9.4 $g/cm^3$ to 0.97 $g/cm^3$, and a molecular weight distribution, Mw/Mn, greater than 8, and

the high molecular weight ethylene polymer has a weight average molecular weight greater than 200,000 g/mole, and a molecular weight ratio, Mz/Mw, less than 5, and

wherein the high molecular weight ethylene polymer is present in an amount less than, or equal to, 15 weight percent, and wherein the high density ethylene polymer has a HLMI greater than, or equal to, 19, and a ratio, $I_{21}/I_2$ of greater than, or equal to, 70; preferably greater than, or equal to, 80; and more preferably greater than, or equal to, 90.

The invention also provides a composition comprising a high density ethylene polymer and a high molecular weight ethylene polymer, and wherein

the high density ethylene polymer has a density greater than the density of the high molecular weight ethylene polymer, and

the high molecular weight ethylene polymer has a weight average molecular weight greater than the weight average molecular weight of the high density ethylene polymer, and

wherein the high density ethylene polymer has a density from 0.94 $g/cm^3$ to 0.98 $g/cm^3$, and more preferably from 0.94 $g/cm^3$ to 0.97 $g/cm^3$, and a molecular weight distribution, Mw/Mn, greater than 8, and

the high molecular weight ethylene polymer has a weight average molecular weight greater than 200,000 g/mole, and a molecular weight ratio, Mz/Mw, less than 5, and

wherein the high molecular weight ethylene polymer is present in an amount less than, or equal to, 15 weight percent, and wherein the high density ethylene polymer has an $I_2$ greater than, or equal to, 0.1 g/10 minutes; and preferably greater than, or equal to, 0.2 g/10 minutes. In another embodiment, the high density ethylene polymer has an $I_2$ greater than, or equal to, 0.3 g/10 minutes, preferably greater than, or equal to, 0.4 g/10 minutes. In another embodiment, the high density ethylene polymer has an 12 from 0.2 g/10 minutes to 0.5 g/10 minutes, preferably from 0.2 g/10 minutes to 0.4 g/10 minutes, and more preferably from 0.2 g/10 minutes to 0.3 g/10 minutes.

The invention also provides for a tri-component composition comprising the high density ethylene polymer component and the high molecular weight ethylene polymer component, as discussed above, and, in addition, a low molecular weight ethylene polymer or polyethylene wax.

The invention also provides for a composition comprising the high density ethylene polymer component, as discussed above, and the low molecular weight ethylene polymer or polyethylene wax.

Other polymers, such as, low molecular weight polypropylene homopolymers, copolymers and interpolymers, may be used in place of the low molecular weight ethylene polymer or polyethylene wax.

The invention also provides for further embodiments of the above compositions and combinations of such embodiments, as discussed below.

It has been found that a shift in the molecular weight distribution, Mw/Mn, of ethylene based polymer has limited effect on swell (each catalyst has a "typical swell"). However, contrary to conventional understanding, it has been found that swell is very sensitive to the slope of the high molecular weight tail (as determined by GPC) of an ethylene polymer composition, and thus, the Mz/Mw molecular weight ratio.

It has also been discovered that ESCR performance is strongly dependent on the amount of high molecular weight component in the resin composition, and that the larger amount of the high molecular weight component present, the better ESCR performance, while unexpectedly maintaining low swell, is observed in products formed from such compositions.

In preferred embodiments, the inventive compositions exhibit slow crack growth, as measured by the Notched Constant Ligament Stress test method, as discussed below. NCLS values greater than 40 hours (15 percent ligament stress at 50°C) were observed.

In additional preferred embodiments, the inventive compositions exhibit an extrudate swell that is lower than the extrudate swell of a similar composition containing the high density ethylene polymer component, but not the high molecular weight ethylene polymer component.

In one embodiment, the molecular weight distribution of each component is unimodal, and more preferably unimodal and distinct. Preferably, the ratio of the weight average molecular weights of the high molecular weight component and the high density component, Mw (high MW)/Mw (high density) is 3.0 or higher, preferably 4.0 or higher, and more preferably 5.0 or higher.

Additives may be added to the compositions of the invention as needed. These additives include, but are not limited to, antioxidants, ultraviolet light absorbers, antistatic agents, pigments, dyes, flavorants, nucleating agents, fillers, slip agents, fire retardants, plasticizers, processing aids, lubricants, stabilizers, smoke inhibitors, viscosity control agents, crosslinking agents, catalysts, boosters, tackifiers, and antiblocking agents. The resin composition, together with the desired additives, and/or any other resin to be blended into the final composition, may be mixed together using devices, such as blenders and extruders, and other devices known in the art The choice and amount of additives used, depend on the processing characteristics and final properties of the final product.

Ethylene polymers suitable for the invention include ethylene homopolymers and ethylene interpolymers. The ethylene interpolymers may be heterogeneously branched or homogeneously branched polymers.

Suitable comonomers useful for interpolymers of ethylene, include, but are not limited to, ethylenically unsaturated monomers, conjugated or nonconjugated dienes or polyenes, and mixtures thereof. Examples of such comonomers include the $C_3$-$C_{20}$ α-olefins, such as, propylene, isobutylene, 1-butene, 1-pentene, 1-hexene, 3-methyl-1-pentene, 4-methyl-1-pentene, 1-heptene, 1-octene, 1-nonene, 1-decene, and the like. All individual values and subranges from 3 carbon atoms to 20 carbon atoms, are included herein and disclosed herein. Preferred comonomers include propylene, 1-butene, 1-hexene, 4-methyl-1-pentene, 1-octene and mixtures thereof. Other suitable monomers include styrene, halo-substituted styrenes, alkyl-substituted styrenes, tetrafluoroethylenes, vinylbenzocyclobutanes, butadienes, isoprenes, pentadienes, hexadienes (for example, 1,4-hexadiene), octadienes, cycloalkenes (for example, cyclopentene, cyclohexene and cyclooctene) and other naphthenics. Typically, ethylene is copolymerized with one $C_3$-$C_{20}$ α-olefin. Preferred $C_3$-$C_8$ α-olefins include, but are not limited to, propylene, 1-butene, isobutylene, 1-pentene, 3-methyl-1-pentene, 4-methyl-1-pentene, 1-hexene, 1-heptene, and 1-octene; and more preferably propylene, 1-hexene, 1-heptene, and 1-octene.

The invention also provides for an article prepared from an inventive composition, and for an article comprising at least one component formed from an inventive composition.

The invention also provides for methods of forming the inventive compositions. In one embodiment, the method comprises blending the high density ethylene polymer and the high molecular weight ethylene polymer. In a further embodiment, the high density ethylene polymer and the high molecular weight ethylene polymer, as isolated polymers, are blended together in one or more post-reactor processes (post-reactor blend). In another embodiment, high density ethylene polymer and the high molecular weight ethylene polymer are formed in one or more polymerization reactors, such that the resultant polymer product is a blend of these two polymers (*in-situ* reactor blend).

The invention also provides for methods of forming the inventive articles, or components thereof On one embodiment, the article, or component thereof, is formed using a melt extrusion process, such as an injection molding or blow molding process. In a preferred embodiment, the article, or component thereof, is formed by blow molding an inventive composition.

The inventive compositions may comprise two or more aspect and/or embodiments as described herein. The inventive methods for forming such compositions may comprise two or more aspect and/or embodiments as described herein.

The inventive articles may comprise two or more aspects and/or embodiments as described herein. The inventive methods for forming such articles may comprise two or more aspect and/or embodiments as described herein.

High Density Ethylene Polymer

Generally, the composition contains from 60 to 95 weight percent, and preferably from 65 to 95 weight percent, of the high density ethylene polymer component, based on the total weight of the composition. All individual values and subranges from 60 to 95 weight percent, are included and disclosed herein. The weight percentages are based on the total weight of the composition.

In one embodiment, the weight average molecular weight of this component is preferably in the range from 25,000 to 1,000,000 g/mole, more preferably in the range of from 50,000 to 500,000 g/mole, even more preferably from 50,000 to 200,000 g/mole, or 250,000 g/mole, and most preferably from 50,000 to 150,000 g/mole. All individual values and subranges from 25,000 to 1,000,000 g/mole, are included herein and disclosed herein.

In another embodiment, the molecular weight distribution, Mw/Mn, of the high density ethylene polymer component is preferably greater than 8, more preferably greater than 10, and even more preferably greater than 12, and even more preferably greater than 14. All individual values and subranges from 8 to 50, are included and disclosed herein.

In another embodiment, the density of the high density ethylene polymer component is preferably greater than, or equal to, 0.940 $g/cm^3$, more preferably greater than, or equal to, 0.945 $g/cm^3$ and most preferably greater than, or equal to, 0.950 $g/cm^3$. Preferably the density is from 0.94 $g/cm^3$ to 0.98 $g/cm^3$, more preferably from 0.950 $g/cm^3$ to 0.970 $g/cm^3$, and even more preferably from 0.945 $g/cm^3$ to 0.960 $g/cm^3$ or to 0.965 $g/cm^3$. All individual values and subranges from 0.94 $g/cm^3$ to 0.98 $g/cm^3$ are included herein and disclosed herein. In another embodiment, the high density ethylene polymer has a density from 0.94 $g/cm^3$ to 0.97 $g/cm^3$.

In another embodiment, the high density ethylene polymer has a melt index ($I_2$) of less than, or equal to, 100 g/10 minutes, and preferably a melt index from 0.01 to 100 g/10 minutes, and more preferably from 0.1 to 20 g/10 minutes, and most preferably from 0.2 to 5 g/10 minutes, as determined using ASTM D-1238 (190°C, 2.16 kg load). In another embodiment, the polymer has a melt index from 0.15 to 5 g/10 min. All individual values and subranges from 0.01 to 100g/10 minutes, are included herein and disclosed herein.

In another embodiment, the high density ethylene polymer has a percent crystallinity of greater than, or equal to, 50 percent, preferably greater than, or equal to, 60 percent, and more preferably greater than, or equal to, 70 percent, as measured by DSC. Preferably, these polymers have a percent crystallinity from 50 percent to 80 percent, and all individual values and subranges from 50 percent to 80 percent are included herein and disclosed herein.

In another embodiment, the high density ethylene polymer has at least one crystallization temperature, Tc, from 80°C to 140°C, preferably from 90°C to 130°C, and more preferably from 110°C to 125°C. All individual values and subranges from 80°C to 140°C are included herein and disclosed herein.

In another embodiment, the highs density ethylene polymer has at least one melting temperature, Tm, from 100°C to 160°C, preferably from 110°C to 140°C, and more preferably from 120°C to 135°C. All individual values and subranges from 100°C to 160°C are included herein and disclosed herein.

The high density ethylene polymer component may have a combination of properties from two or more of the above embodiments.

The high density ethylene polymer component is preferably a homopolymer or an ethylene/α-olefin copolymer or interpolymer. These ethylene/a-olefin copolymers and interpolymers typically will have a comonomer incorporation in the final polymer less than 5 mole percent, preferably less than 2 mole percent, more preferably less than 1 mole percent, and even more preferably less than 0.5 mole percent, based on the total number of moles of polymerizable monomer constituents. All individual values and subranges from greater than 0 to 5 mole percent comonomer are included herein and disclosed herein.

The high density ethylene polymer component may be prepared by syntheses known in the art, including, but not limited to gas phase polymerizations using chromium-based catalyst systems.

Suitable examples of the high density ethylene polymer component include gas-phase HDPE resins, prepared using chromium based catalysts.

High Molecular Weight Ethylene Polymer

The compositions of the invention may contain from 2 to 30 weight percent, more preferably from 5 to 20 weight percent of a high molecular weight ethylene polymer. All individual values and subranges from 2 to 30 weight percent are included herein and disclosed herein. The weight percentages are based on the total weight of the composition. In another embodiment, the high molecular weight ethylene polymer is present in an amount less than, or equal, to 20 weight percent, based on the total weight of the composition. In yet another embodiment, the high molecular weigh ethylene polymer is present in an amount less than, or equal to, 15 weight percent, based on the total weight of the composition.

In one embodiment, the high molecular weight ethylene polymer has a melt index ($I_2$) of less than, or equal, to 10 g/10 minutes, preferably has a melt index from 0.001 to 10 g/10 minutes, more preferably from 0.01 to 10 g/10 minutes, and most preferably from 0.01 g/10 minutes to 1 g/10 minutes. All individual values and subranges from 0.001 g/10 min to 10 g/10 min are included herein and disclosed herein.

In another embodiment, the high molecular weight ethylene polymer has a weight average molecular weight greater than 200,000 g/mole. In one embodiment, the weight average molecular weight is in the range from 200,000 to 10,000,000 g/mole, more preferably in the range from 300,000 to 1,000,000 g/mole, and most preferably in the range of from 400,000 to 700,000 g/mole. All individual values and subranges from 200,000g/mole to 10,000,000 g/mole are included herein and disclosed herein. In another embodiment, the high molecular weight ethylene polymer has a weight average molecular weight greater than 300,000 g/mole, preferably greater than 400,000 g/mole, and more preferably greater than 500,000 g/mole. In another embodiment, the high molecular weight ethylene polymer has a weight average molecular weight from 200,000 g/mole to 1,000,000 g/mole, and preferably from 300,000 g/mole to 1,000,000 g/mole.

In another embodiment, the molecular weight ratio, Mz/Mw, of the high molecular weight ethylene polymer, is typically less than 5, and preferably less than 4. In some embodiments, this ratio is less than 3.5, and more preferably from 1.2 to 3.0 or 1.5 to 3.0. In another embodiment, the molecular weight ratio, Mz/Mw, is less than 2.5. In another embodiment, the molecular weight ratio, Mz/Mw, is from 3 to 5, and preferably from 4 to 5. All individual values and subranges from 1.2 to 5 are included herein and disclosed herein.

In another embodiment, the molecular weight distribution, Mw/Mn, of the high molecular weight ethylene polymer, is typically less than 5, and preferably less than 4. In some embodiments, the molecular weight distribution is less than 3.5, and more preferably from 1.2 to 3.0, or 1.5 to 3.0. In another embodiment, the molecular weight distribution, Mw/Mn, is less than 2.5. In another embodiment, the molecular weight distribution, Mw/Mn, is from 3 to 5, and preferably from 4 to 5. All individual values and subranges from 1.2 to 5 are included herein and disclosed herein.

In another embodiment, the high molecular weight ethylene polymer has a density ranging from 0.90 to 0.955 g/cm$^3$. In some embodiments, an upper limit for the density of the high molecular weight component is 0.94 g/cm$^3$, 0.93 g/cm$^3$, or 0.92 g/cm$^3$. In another embodiment, the polymer has a density from 0.900 to 0.940 g/cm$^3$. All individual values and subranges from 0.90 to 0.955 g/cm$^3$ are included herein and disclosed herein. In another embodiment, the high molecular weight ethylene polymer has a density ranging from 0.90 to 0.94 g/cm$^3$, preferably from 0.90 to 0.93 g/cm$^3$, and more preferably from 0.90 to 0.92 g/cm$^3$.

In another embodiment, the high molecular weight ethylene polymer has a percent crystallinity of less than, or equal to, 60 percent, preferably less than, or equal to, 55 percent, and more preferably less than, or equal to, 50 percent, as measured by DSC. Preferably, these polymers have a percent crystallinity from 40 percent to 55 percent, and all individual values and subranges from 35 percent to 70 percent are included herein and disclosed herein.

In another embodiment, the high molecular weight ethylene polymer has at least one crystallization temperature, Tc, from 70°C to 130°C, preferably from 80°C to 120°C, and more preferably from 90°C to 115°C. All individual values and subranges from 70°C to 130°C are included herein and disclosed herein.

In another embodiment, the high molecular weight ethylene polymer has at least one melting temperature, Tm, from 90°C to 140°C, preferably from 100°C to 130°C, and more preferably from 110°C to 125°C. All individual values and subranges from 90°C to 140°C are included herein and disclosed herein.

The high molecular weight ethylene polymer component may have a combination properties from two or more of the above embodiments.

The high molecular weight ethylene polymer is preferably an ethylene homopolymer or an ethylene/$\alpha$-olefin copolymer or interpolymer. The ethylene/$\alpha$-olefin copolymers or interpolymers typically will have a comonomer incorporation in the final polymer less than 10 mole percent, preferably less than 5 mole percent, more preferably less than 2 mole percent, and even more preferably less than 1 mole percent, based on the total number of moles of polymerizable monomer constituents. All individual values and subranges from 0.01 to 10 mole percent are included herein and disclosed herein. In another embodiment, the $\alpha$-olefin is a $C_3$-$C_{20}$ olefin.

In another embodiment, the high molecular weight ethylene polymer has 0.01 to 1 long chain branches per 1000 carbon atoms. In yet another embodiment, the high molecular weight ethylene polymer has 0.01 to 0.5 long chain branches per 1000 carbon atoms.

The high molecular weight ethylene polymer component may be prepared by syntheses known in the art, including, but not limited to, solution, slurry, or gas phase polymerizations using a single site, metallocene, or constrained geometry catalyst system.

Suitable examples of the high molecular weight ethylene polymer component include resins prepared using a metallocene and constrained geometry catalyst system.

In one embodiment, the high molecular weight ethylene polymer component has a similar amount of comonomer as the high density ethylene polymer component However, the comonomer distribution may vary between the two components.

In another embodiment, the high molecular weight ethylene polymer is a homogeneously branched linear or homogeneously branched substantially linear ethylene/$\alpha$-olefin interpolymer, characterized as having a substantially uniform comonomer distribution. Information regarding the relative uniformity of the comonomer distribution for ethylene interpolymers is typically described by the SCBDI (Short Chain Branch Distribution Index) or CDBI (Composition Distribution Branch Index). The SCBDI is defined as the weight percent of the polymer molecules having a comonomer content within 50 percent of the median total molar comonomer content, and represents a comparison of the comonomer distribution in the interpolymer and the comonomer distribution expected for a Bernoullian distribution. The SCBDI of an interpolymer can be readily calculated from TREF, as described, for example, by Wild et al., Journal of Polymer Science, Poly. Phys. Ed, Vol. 20, p. 441 (1982); U.S. Pat. No. 4,798,081; U.S. Pat. No. 5,008,204; or L. D. Cady, "The Role of Comonomer Type and Distribution in LLDPE Product Performance, "SPE Regional Technical Conference, Quaker Square Hilton, Akron, Ohio, October 1-2, pp. 107-119 (1985), the disclosures of all four references are incorporated herein by reference.

The preferred TREF technique does not include purge quantities in SCBDI calculations. More preferably, the comonomer distribution of the interpolymer and SCBDI are determined using $^{13}$C NMR analysis in accordance with techniques described in U.S. Pat. No. 5,292,845; U.S. Pat. No. 4,798,081; U.S. Pat. No. 5,089,321; and by J. C. Randall, Rev. Macromol. Chem. Phys., C29, pp. 201-317, the disclosures of all four references are incorporated herein by reference.

Processes for preparing homogeneous polymers are disclosed in U.S. Pat. No. 5,206,075; U.S. Pat. No. 5,241,031; and PCT International Application WO 93/03093; each of which is incorporated, herein, by reference in its entirety. Further details regarding the production, and use, of homogeneous ethylene $\alpha$-olefin copolymers are disclosed in U.S. Pat. No. 5,206,075; U.S. Pat. No. 5,241,031; PCT International Publication Number WO 93/03093; PCT International Publication Number WO 90/03414; all four of which are herein incorporated, herein, in their entireties, by reference. Other homogeneous ethylene/α-olefin interpolymers are disclosed in U.S. Pat. No. 5,272,236 and U.S. Pat. No. 5,278,272; both of which are incorporated, herein, in their entireties, by reference.

Homogeneous interpolymers may be prepared using a constrained geometry catalyst. Examples of constrained geometry catalysts are described in U.S Patent Nos. 5,272,236 and 5,278,272, the contents of each are incorporated herein by reference. These catalysts may be further described as comprising a metal coordination complex, comprising a metal of groups 3-10 or the Lanthanide series of the Periodic Table of the Elements, and a delocalized pi-bonded moiety, substituted with a constrain-inducing moiety. The complex has a constrained geometry about the metal atom, such that the angle at the metal between the centroid of the delocalized, substituted pi-bonded moiety, and the center of at least one remaining substituent, is less than such angle in a similar complex, containing a similar pi-bonded moiety lacking in such constrain-inducing substituent. If such complexes comprise more than one delocalized, substituted pi-bonded moiety, only one such moiety, for each metal atom of the complex, is a cyclic, delocalized, substituted pi-bonded moiety. The catalyst further comprises an activating cocatalyst, including, but not limited to, perfluorinated tri(aryl)boron compounds, such as tris(pentafluorophenyl)borane; and nonpolymeric, compatible, noncoordinating ion forming compounds, such as ammonium-, phosphonium-, oxonium-, carbonium-, silylium- or sulfonium- salts of compatible, noncoordinating anions, and ferrocenium salts of compatible noncoordinating anions.

Homogeneously branched linear ethylene/α-olefin interpolymers may also be prepared using polymerization processes (for example, as described by Elston in U.S. Pat. No. 3,645,992), which provide a homogeneous short chain branching distribution. In his polymerization process, Elston uses soluble vanadium catalyst systems to make such polymers. However, others, such as, Mitsui Petrochemical Company and Exxon Chemical Company, have used so-called single site catalyst systems to make polymers having a homogeneous linear structure. Also, U.S. Pat. No. 4,937,299 and U.S. Pat. No. 5,218,071 disclose the use of other catalyst systems, some based on hafnium, for the preparation of homogeneous linear ethylene polymers. Homogeneous linear ethylene/α-olefin interpolymers are currently available from Mitsui Petrochemical Company under the trade name "TAFMER™," and from Exxon Chemical Company under the trade name "EXACT™."

Homogeneously branched substantially linear ethylene/α-olefin interpolymers are available from The Dow Chemical Company as AFFINITY™ polyolefin plastomers. Homogeneously branched substantially linear ethylene/α-olefin interpolymers may be prepared in accordance with the techniques described in U.S. Pat. No. 5,272,236; U.S. Pat. No. 5,278,272; and U.S. Pat. No. 5,665,800; which are all incorporated, herein, in their entireties, by reference.

In yet other embodiments, the high molecular weight component is an ethylene/α-olefin interpolymer, characterized as having a reverse comonomer distribution, as described in U.S. Publication No. 20030055176. A higher amount of comonomer in the interpolymer component is incorporated in the high molecular weight fractions of the interpolymer component. That is, the polymer fractions having a Mw greater than, or equal to, the average Mw of the interpolymer component, are characterized as having a higher weight average amount of comonomer than the polymer fractions having a Mw less than the average Mw of the interpolymer component. For example, in some embodiments, the total molar comonomer content of all polymer fractions having a Mw greater than, or equal to, 300,000 g/mole, will be at least 25 percent higher, more preferably at least 30 percent higher, than the molar comonomer content of those polymer fractions having a Mw of less than, or equal to, 100,000 g/mole.

Low Molecular Weight Ethylene Polymer or Polyethylene Wax

The compositions of the invention may contain from 2 to 30 weight percent, more preferably from 5 to 20 weight percent of a low molecular weight ethylene polymer or polyethylene wax. All individual values and subranges from 2 to 30 weight percent are included herein and disclosed herein. The weight percentages are based on the total weight of the composition.

The low molecular weight ethylene polymer or polyethylene wax has a density from 0.95 g/cm$^3$ to 0.99 g/cm$^3$, and preferably from 0.96 g/cm$^3$ to 0.985 g/cm$^3$, and more preferably from 0.965 g/cm$^3$ to 0.98 g/cm$^3$. All individual values and subranges from 0.95 g/cm$^3$ to 0.99 g/cm$^3$ are included herein and disclosed herein.

In one embodiment, the low molecular weight ethylene polymer or polyethylene wax has a melt viscosity, measured at 177°C, from 1 mPa·s to 2000 mPa·s, and preferably from 10 mPa·s to 1000 mPa·s, and more preferably from 20 mPa·s to 500 mPa·s. All individual values and subranges from 1 mPa·s to 2000 mPa·s are included herein and disclosed herein.

In another embodiment, the low molecular weight ethylene polymer or polyethylene wax has a weight average molecular weight from 500 g/mole to 20,000 g/mole, and preferably from 1,000 g/mole to 10,000 g/mole, and more preferably from 1,500 g/mole to 5,000 g/mole. All individual values and subranges between 500 to 20,000 g/mole are included herein and disclosed herein.

In another embodiment, the low molecular weight ethylene polymer or polyethylene wax has a molecular weight distribution, Mw/Mn, less than 5, and preferably less than 4. In some embodiments, the molecular weight distribution is less than 3.5, and more preferably from 1.0 to 3.0. All individual values and subranges from 1.0 to 5 are included herein and disclosed herein.

In another embodiment, the low molecular weight ethylene polymer is a homopolymer.

The low molecular weight ethylene polymer or polyethylene wax may have a combination of properties from two or more of the above embodiments.

The low molecular weight ethylene polymer or polyethylene wax may be prepared by syntheses known in the art, including, but not limited to, single site, metallocene, and constrained geometry catalyst system and other known arts.

A suitable example of a low molecular weight ethylene polymer or polyethylene wax includes Polywax 2000, available from Baker Chemicals, with a density: 0.9749 $g/cm^3$ (homopolymer), a viscosity: 28 mPa·s, a Mw: 2,460, and a Mw/Mn: 1.27.

High density/High Mw Composition

The high density/high molecular weight composition comprises at least one high density ethylene polymer and at least one high molecular weight ethylene polymer, each as described above.

In one embodiment, the high density/high molecular weight composition has a HLMI ($I_{21}$) greater than 20 g/10 min. In another embodiment, this composition has a HLMI from 20 g/10 min to 50 g/10 min, and all values and subranges between 20 g/10 min and 100 g/10 minutes are included herein and disclosed herein. In another embodiment, the composition has a HLMI greater than 25 g/10 min, and preferably greater than 30 g/10 min.

In another embodiment, the weight average molecular weight of this composition is preferably in the range from 25,000 to 1,000,000 g/mole, and more preferably in the range of from 100,000 to 300,000 g/mole. All individual values and subranges from 25,000 to 1,000,000 g/mole, are included herein and disclosed herein.

In another embodiment, the molecular weight distribution, Mw/Mn, of this composition is preferably greater than 10, more preferably greater than 15, and even more preferably greater than 20. All individual values and subranges from 10 to 40 are included herein and disclosed herein.

In another embodiment, the density of this composition is preferably greater than, or equal to, 0.94 $g/cm^3$, more preferably greater than, or equal to, 0.945 $g/cm^3$, and most preferably greater than, or equal to, 0.95 $g/cm^3$. In another embodiment, the composition preferably has a density greater than, or equal to, 0.952 $g/cm^3$, and more preferably greater than, or equal to, 0.955 $g/cm^3$. The density may be from 0.95 $g/cm^3$ to 0.985 $g/cm^3$, preferably from 0.952 $g/cm^3$ to 0.985 $g/cm^3$, and all individual values and subranges from 0.94 $g/cm^3$ to 0.985 $g/cm^3$ are included herein and disclosed herein.

In another embodiment, the composition has a melt index ($I_2$) of less than, or equal to, 5 g/10 minutes, and preferably in the range from 0.05 to 2 g/10 minutes, and more preferably from 0.1 to 1 g/10 minutes. All individual values and subranges from 0.05 to 5 g/10 min are included herein and disclosed herein.

In another embodiment, the composition further comprises a low molecular weight ethylene polymer with a weight average molecular weight from 500 to 20,000 g/mole.

In another embodiment, the composition (or the composition in molten form) has an extrudate swell, which is less than the extrudate swell of a composition (or composition in molten form) that contains all of the same components, except the high molecular weight ethylene polymer.

In another embodiment, the composition (or the composition in molten form) has an extrudate swell that is 98 percent or less, preferably 95 percent or less, more preferably 92 percent or less, and even more preferably 78 percent or less, or 67 percent or less, of the extrudate swell, resulting from a composition (or composition in molten form) that contains all of the same components, except the high molecular weight ethylene polymer.

In another embodiment, the composition (or the composition in molded or product form) has an NCLS failure time, greater than the NCLS failure time of a composition (or composition in molded or product form) that contains all of the same components, except the high molecular weight ethylene polymer.

In another embodiment, the composition (or the composition in molded or product form) has an NCLS failure time that is greater than 20 hours, preferably greater than 40 hours, more preferably greater than 50 hours, and even more preferably greater than 100 hours, or greater than 200 hours.

In another embodiment, the composition (or the composition in molded or product form) has an NCLS failure time, which is greater than the NCLS failure time of a composition (or composition in molded or product form) containing only the high density ethylene polymer, by at least 25 percent, preferably by at least 50 percent, more preferably by at least 100 percent, and even more preferably by at least 200 percent, or by at least 400 percent.

The high density/high molecular weight composition may have a combination of properties from two or more of the above embodiments.

High density/High MW/Wax Composition

The high density/high molecular weight/wax composition comprises at least one high density ethylene polymer, at least one the high molecular weight ethylene polymer and at least one low molecular weight ethylene polymer or polyethylene wax, each as described above.

Other polymers, such as, low molecular weight polypropylene homopolymers, copolymers and interpolymers, may be used in place of the low molecular weight ethylene polymer or polyethylene wax.

In one embodiment, the high density/high molecular weight/wax composition has a high load melt index (HLMI) greater than 20 g/10 min. In another embodiment, this composition has a HMLI from 25 g/10 min to 100 g/10 min, and all values and subranges between 25 g/10 min and 100 g/10 minutes are included herein and disclosed herein.

In another embodiment, the weight average molecular weight of this composition is preferably in the range from 25,000 to 1,000,000 g/mole, more preferably in the range of from 50,000 to 300,000 g/mole. All individual values and subranges from 25,000 to 1,000,000 g/mole, are included herein and disclosed herein.

In another embodiment, the molecular weight distribution, Mw/Mn, of this composition is preferably greater than 10, more preferably greater than 15, and even more preferably greater than 20. All individual values and subranges from 10 to 40 are included herein and disclosed herein.

In another embodiment the density of this composition is preferably greater than, or equal to, 0.94 g/cm$^3$, more preferably greater than, or equal to, 0.945 g/cm$^3$, and most preferably, greater than, or equal to, 0.95 g/cm$^3$. The density may be from 0.95 g/cm$^3$ to 0.985 g/cm$^3$, preferably from 0.952 g/cm$^3$ to 0.985 g/cm$^3$, and all individual values and subranges from 0.94 g/cm$^3$ to 0.985 g/cm$^3$ are included herein and disclosed herein.

In another embodiment, the composition has a melt index ($I_2$) of less than, or equal to, 5 g/10 minutes, and preferably in the range of from 0.05 to 2 g/10 minutes, and more preferably from 0.1 to 1 g/10 minutes. All individual values and subranges from 0.05 to 5 g/10 min are included herein and disclosed herein.

In another embodiment, the composition (or the composition in molten form) has an extrudate swell, which is less than the extrudate swell of a composition (or composition in molten form) that contains all of the same components, except the high molecular weight ethylene polymer.

In another embodiment, the composition (or the composition in molten form) has an extrudate swell that is 98 percent or less, preferably 95 percent or less, more preferably 92 percent or less, and even more preferably 78 percent or less, or less than 67 percent, of the extrudate swell, resulting from a composition (or composition in molten form) that contains all of the same components, except the high molecular weight ethylene polymer.

In another embodiment, the composition (or the composition in molded or product form) has an NCLS failure time, greater than the NCLS failure time of a composition (or composition in molded or product form) that contains all of the same components, except the high molecular weight ethylene polymer.

In another embodiment, the composition (or the composition in molded or product form) has an NCLS failure time that is greater than 20 hours, preferably greater than 40 hours, more preferably greater than 50 hours, and even more preferably greater than 100 hours, or greater than 200 hours.

In another embodiment, the composition (the or composition in molded or product form) has an NCLS failure time, which is greater than the NCLS failure time of a composition (or composition in molded or product form) containing only the high density ethylene polymer, by at least 25 percent, preferably by at least 50 percent, more preferably by at least 100 percent, and even more preferably by at least 200 percent, or by at least 400 percent.

The high density/high molecular weight/wax composition may have a combination of properties from two or more of the above embodiments:

High Density/Wax Composition

The high density/wax composition comprises at least one high density ethylene polymer and at least one low molecular weight ethylene polymer or polyethylene wax, as discussed above.

Other polymers, such as, low molecular weight polypropylene homopolymers, copolymers and interpolymers, may be used in place of the low molecular weight ethylene polymer or polyethylene wax.

In one embodiment, the weight average molecular weight of this composition is preferably in the range from 20,000 to 500,000 g/mole, more preferably in the range of from 50,000 to 200,000 g/mole. All individual values and subranges from 20,000 to 500,000 g/mole, are included and disclosed herein.

In another embodiment, the molecular weight distribution of this composition is preferably greater than 10, more preferably greater than 15, and even more preferably greater than 20. All individual values and subranges from 10 to 40 are included herein and disclosed herein.

In another embodiment the density of this composition is preferably greater than, or equal to, 0.94 g/cm$^3$, more preferably greater than, or equal to, 0.95 g/cm$^3$, and most preferably, greater than, or equal to, 0.955 g/cm$^3$. The density may be from 0.94 g/cm$^3$ to 0.985 g/cm$^3$, preferably from 0.952 g/cm$^3$ to 0.985 g/cm$^3$, and all individual values and subranges from 0.94 g/cm$^3$ to 0.985 g/cm$^3$ are included herein and disclosed herein.

The high density/wax composition may have a combination of properties from two or more of the above embodiments.

Preparation of Compositions

The inventive compositions may be prepared by a variety of methods. For example, compositions may be prepared by blending or mixing the high density ethylene polymer and the high molecular weight ethylene polymer and/or the low molecular weight ethylene polymer or polyethylene wax in a suitable mixing device, such as a blender or extruder. Alternatively, these compositions may be prepared through polymerization reactions in a plurality of polymerization reactors.

Some blending methods include, but are not limited to, blending components by means of an extruder, a kneader, or the like; dissolving the components in an appropriate solvent (for example, hydrocarbon solvent, such as, hexane, heptane, decane, cyclohexane, benzene, toluene or xylene), followed by solvent removal; independently dissolving one or more components in an appropriate solvent, combining the resulting solutions, followed by solvent removal; and any combination of these blending methods.

For the preparation of a composition through polymerization, the polymerization may be conducted in one, or two, or more stages, under different reaction conditions to prepare the respective components. The polymer components may be mixed prior to the isolation of the product composition. If the polymerization is conducted in one reaction, two or more catalyst systems may be used to form the respective components.

Applications of Compositions of the Invention

The inventive compositions have excellent moldability, and can be molded into various articles (for example, cans for industrial chemicals, drum cans, bottles, inflation films and pipes), through various molding (or forming) methods, such as, blow molding, vacuum or pressure forming, inflation molding, extrusion molding and expansion molding. The molded articles thus produced, for example, cans for industrial chemicals, drum cans and bottles, are excellent in mechanical strength as well as in rigidity.

The compositions of the invention are particularly useful for blow molding operations, however, they can also be used in various injection molding processes, rotomolding processes, thermoforming processes and various film processes. Thus articles prepared by all of these processes can be formed from the compositions of the invention.

For blow molding fabrication, having the ability to control the swell of a resin allows for a larger operating window for parison programming. The fabricator can position the polymer in the most relevant region of the blow molded part to control the part thickness distribution more easily, to optimize the ESCR, and top-load balance. Hence the fabricated product performance will be improved and will have better physical properties.

DEFINITIONS

Any numerical range recited herein, includes all values from the lower value and the upper value, in increments of one unit, provided that there is a separation of at least two units between any lower value and any higher value. As an example, if it is stated that a compositional, physical or other property, such as, for example, molecular weight, viscosity, melt index, is from 100 to 1,000, it is intended that all individual values, such as 100, 101, 102, etc., and sub ranges, such as 100 to 144, 155 to 170, 197 to 200, etc., are expressly enumerated in this specification. For ranges containing values which are less than one, or containing fractional numbers greater than one (for example, 1.1, 1.5, etc.), one unit is considered to be 0.0001, 0.001, 0.01 or 0.1, as appropriate. For ranges containing single digit numbers less than ten (for example, 1 to 5), one unit is typically considered to be 0.1. These are only examples of what is specifically intended, and all possible combinations of numerical values between the lowest value and the highest value enumerated, are to be considered to be expressly stated in this application. Numerical ranges have been recited, as discussed herein, in reference to melt viscosity, melt index, weight average molecular weight, molecular weight distribution (Mw/Mn), various temperatures (Tm, Tc), percent crystallinity, molecular weight ratio (Mz/Mw), percent comonomer, number of carbon atoms in the comonomer, and other properties.

The term "composition," as used herein, includes a mixture of materials which comprise the composition, as well as reaction products and decomposition products formed from the materials of the composition.

The term "polymer," as used herein, refers to a polymeric compound prepared by polymerizing monomers, whether of the same or a different type. The generic term polymer thus embraces the term homopolymer, usually employed to refer to polymers prepared from only one type of monomer, and the term interpolymer as defined hereinafter.

The term "interpolymer," as used herein, refers to polymers prepared by the polymerization of at least two different types of monomers. The generic term interpolymer thus includes copolymers, usually employed to refer to polymers prepared from two different types of monomers, and polymers prepared from more than two different types of monomers.

The term "ethylene polymer," as used herein, refers to a polymer formed from predominantly (greater than 50 mole percent) ethylene monomeric units. Mole percentage is based on the total moles of polymerizable monomers.

The terms "blend" or "polymer blend," as used herein, mean a blend of two or more polymers. Such a blend may or may not be miscible. Such a blend may or may not be phase separated. Such a blend may or may not contain one or more domain configurations, as determined from transmission electron spectroscopy. Such a blend may be a "post-reactor" blend, or may be an *in-situ* polymerized blend.

The term "substantially uniform comonomer distribution" is used herein to mean that comonomer content of the polymer fractions across the molecular weight range of the polymer component vary by less than 10 weight percent, preferably less than 8 weight percent, more preferably less than 5 weight percent, and most preferably less than 2 weight percent.

The term "reverse comonomer distribution" is used herein to mean that across the molecular weight range of the polymer component, comonomer contents for the various polymer fractions are not substantially uniform, and the higher molecular weight fractions thereof, have proportionally higher comonomer contents. Both a substantially uniform comonomer distribution and a reverse comonomer distribution can be determined using fractionation techniques, such as, gel permeation chromatography-differential viscometry (GPC-DV), temperature rising elution fraction-differential viscometry (TREF-DV) and cross-fractionation techniques.

The terms "homogeneous" and "homogeneously-branched" are used in reference to an ethylene/α-olefin polymer (or interpolymer), in which the α-olefin comonomer is randomly distributed within a given polymer molecule, and substantially all of the polymer molecules have the same ethylene-to-comonomer ratio.

The homogeneously branched ethylene interpolymers that can be used in the practice of this invention include linear ethylene interpolymers, and substantially linear ethylene interpolymers.

Included amongst the homogeneously branched linear ethylene interpolymers are ethylene polymers, which lack long chain branching, but do have short chain branches, derived from the comonomer polymerized into the interpolymer, and which are homogeneously distributed, both within the same polymer chain, and between different polymer chains. That is, homogeneously branched linear ethylene interpolymers lack long chain branching, just as is the case for the linear low density polyethylene polymers or linear high density polyethylene polymers, made using uniform branching distribution polymerization processes as described, for example, by Elston in U.S. Patent 3,645,992. Commercial examples of homogeneously branched linear ethylene/α-olefin interpolymers include TAFMER™ polymers supplied by the Mitsui Chemical Company and EXACT™ polymers supplied by ExxonMobil Chemical Company.

The substantially linear ethylene interpolymers used in the present invention are described in U.S. Patent Nos. 5,272,236; 5,278,272; 6,054,544; 6,335,410 and 6,723,810; the entire contents of each are herein incorporated by reference. The substantially linear ethylene interpolymers are those in which the comonomer is randomly distributed within a given interpolymer molecule, and in which substantially all of the interpolymer molecules have the same ethylene/comonomer ratio within that interpolymer.

In addition, the substantially linear ethylene interpolymers are homogeneously branched ethylene polymers having long chain branching. The long chain branches have the same comonomer distribution as the polymer backbone, and can have about the same length as the length of the polymer backbone. "Substantially linear," typically, is in reference to a polymer that is substituted, on average, with 0.01 long chain branches per 1000 total carbons (including both backbone and branch carbons) to 3 long chain branches per 1000 total carbons.

Some substantially linear polymers may be substituted with 0.01 long chain branches per 1000 total carbons to 1 or 0.5 long chain branch per 1000 total carbons, more preferably from 0.05 long chain branches per 1000 total carbons to 1 or 0.5 long chain branch per 1000 total carbons, and especially from 0.3 long chain branches per 1000 total carbons to 1 or 0.5 long chain branch per 1000 total carbons:

Commercial examples of substantially linear polymers include the ENGAGE™ polymers (previously DuPont Dow Elastomers L.L.C., now The Dow Chemical Company), and AFFINITY™ polymers (The Dow Chemical Company).

The substantially linear ethylene interpolymers form a unique class of homogeneously branched ethylene polymers. They differ substantially from the well known class of conventional, homogeneously branched linear ethylene interpolymers, described by Elston in U.S. Patent 3,645,992, and, moreover; they are not in the same class as conventional heterogeneous Ziegler-Natta catalyst polymerized linear ethylene polymers [for example, ultra low density polyethylene (ULDPE), linear low density polyethylene (LLDPE) or high density polyethylene (HDPE), made, for example, using the technique disclosed by Anderson et al., in U.S. Patent 4,076,698]; nor are they in the same class as high pressure, free-radical initiated, highly branched polyethylenes, such as, for example, low density polyethylene (LDPE), ethylene-acrylic acid (EAA) copolymers and ethylene vinyl acetate (EVA) copolymers.

The homogeneously branched, substantially linear ethylene interpolymers useful in the invention have excellent processability, even though they have a relatively narrow molecular weight distribution. Surprisingly, the melt flow ratio $(I_{10}/I_2)$, according to ASTM D 1238, of the substantially linear ethylene interpolymers can be varied widely, and essentially independently of the molecular weight distribution (Mw/Mn or MWD). This surprising behavior is completely contrary to conventional homogeneously branched linear ethylene interpolymers, such as those described, for example, by Elston in U.S. 3,645,992, and heterogeneously branched conventional Ziegler-Natta polymerized linear polyethylene interpolymers, such as those described, for example; by Anderson et al., in U.S. 4,076,698. Unlike substantially linear ethylene interpolymers, linear ethylene interpolymers (whether homogeneously or heterogeneously branched) have rheological properties, such that, as the molecular weight distribution increases, the $I_{10}/I_2$ value also increases.

The term "bimodal," as used herein, means that the molecular weight distribution (MWD) profile in a GPC curve exhibits two component polymers, wherein one component polymer may even exist as a hump, shoulder or tail, relative to the MWD of the other component polymer. A bimodal MWD can be deconvoluted into two components: low molecular weight (LMW) component and a high molecular weight (HMW) component.

The term "unimodal," as used herein, in reference to the overall MWD of comparative examples, or in reference to the MWD of a component polymer of the inventive composition, means the MWD in a GPC curve does not substantially exhibit multiple component polymers (that is, no humps, shoulders or tails exist, or are substantially discernible, in the GPC curve).

The term "distinct," as used herein, in reference to the molecular weight distribution of the low molecular weight (LMW) component and the high molecular weight (HMW) component, means there is no substantial overlapping of the two corresponding molecular weight distributions in the resulting GPC curve. That is, each molecular weight distribution is sufficiently narrow, and each has an average molecular weight that is sufficiently different from the other, such that the MWD of each component substantially exhibits a baseline on its high molecular weight side, as well as on its low molecular weight side.

The term "swell," as used herein, refers to the enlargement of the cross sectional dimensions, with respect to the die dimensions, of the polymer melt as it emerges from the die. This phenomenon, also known as "Barus effect," is widely accepted to be a manifestation of the elastic nature of the melt, as it recovers from the deformations it has experienced during its flow into and through the die. For blow molding applications, the swell of the parison can be described by the enlargement of its diameter ("flare swell") or of its cross-sectional area ("weight swell") compared to the respective dimensions of the annular die itself. The term "extrudate swell," as used herein, describes the swell of a polymer from a circular die, and is measured as the weight of an extrudate of a fixed length, produced at fixed output rate. This small-scale measurement relates to observations in parison weight swell, and is expected to relate to the weight of bottles produced under standard conditions.

The phrase "a density greater than the density of ..." and similar phrases are in reference to any measurable increase in density, as known in the art. Density differences of 0.01 g/cm$^3$ and less are measurable in the art.

The phrase "a weight average molecular weight greater than the weight average molecular weight of ..." and similar phrases are in reference to any measurable increase in weight average molecular weight, as known in the art. Molecular weight determinations can measure differences in molecular weight within 15 percent of the molecular weight of the higher molecular weight polymer.

TEST PROCEDURES

Absolute and Conventional GPC Molecular Weight Determination

The chromatographic system consisted of a Waters (Millford, MA) 150C high temperature chromatograph, equipped with a PolymerChar (Valencia, Spain) IR4 Infra-red detector, and a Precision Detectors (Bellingham, MA) 2-angle laser light scattering detector Model 2040. The 15-degree angle of the light scattering detector was used for the calculation of molecular weights. Data collection was performed using Viscotek (Houston, TX) TriSEC software version 3 and a 4-channel Viscotek Data Manager DM400. The system was equipped with an on-line solvent degas device from Polymer Laboratories.

The carousel compartment was operated at 140°C, and the column compartment was operated at 150°C. The columns were 4 Shodex HT 806M 13-micron columns. The solvent was 1,2,4 trichlorobenzene (TCB). The samples were prepared at a concentration of 0.1 grams of polymer in 50 milliliters of decahydronapthalene (decalin). The chromatographic solvent (TCB) and the sample preparation solvent (decalin) contained 200 ppm of butylated hydroxytoluene (BHT). Both solvent sources were nitrogen sparged. Polyethylene samples were stirred gently at 150°C for 4 hours. The injection volume was 200 microliters and the flow rate was 0.63 milliliters/minute.

Calibration of the GPC column set was performed with 21 narrow molecular weight distribution polystyrene standards, with molecular weights ranging from 580 to 8,400,000, and were arranged in 6 "cocktail" mixtures, with at least a decade of separation between individual molecular weights. The standards were purchased from Polymer Laboratories Ltd. (Shropshire, UK). The polystyrene standards were prepared at 0.025 grams in 50 milliliters of solvent, for molecular weights equal to, or greater than, 1,000,000, and 0.05 grams in 50 milliliters of solvent, for molecular weights less than 1,000,000. The polystyrene standards were dissolved at 80°C, with gentle agitation, for 30 minutes. The narrow standards mixtures were run first and in order of decreasing highest molecular weight component to minimize degradation. The polystyrene standard peak molecular weights were converted to polyethylene molecular weights using the following equation (as described in Williams and Ward, J. Polym. Sci., Polym. Let., 6, 621 (1968)).:

$$\text{Mpolyethylene} = A \times (\text{Mpolystyrene})^{B} \quad (1),$$

where M is the molecular weight, A has a value of 0.41 and B is equal to 1.0.

A fourth or fifth order polynomial was used to fit the respective polyethylene-equivalent calibration points.

The total plate count of the GPC column set was performed with Eicosane (prepared at 0.04 g in 50 milliliters of TCB, and dissolved for 20 minutes with gentle agitation.) The plate count and symmetry were measured on a 200 microliter injection according to the following equations:

$$\text{PlateCount} = 5.54 * (\text{RV at Peak Maximum} / (\text{Peak width at } \tfrac{1}{2} \text{ height}))^{\wedge}2 \quad (2),$$

where RV is the retention volume in milliliters, and the peak width is in milliliters.

$$\text{Symmetry} = (\text{Rear peak width at one tenth height} - \text{RV at Peak maximum}) / (\text{RV at Peak Maximum} - \text{Front peak width at one tenth height}) \quad (3),$$

where RV is the retention volume in milliliters, and the peak width is in milliliters.

The Systematic Approach for the determination of multi-detector offsets was done in a manner consistent with that published by Balke, Mourey, et. Al (Mourey and Balke, Chromatography Polym. Chpt 12, (1992)) (Balke, Thitiratsakul, Lew, Cheung, Mourey, Chromatography Polym. Chpt 13, (1992)), optimizing dual detector log results from Dow broad polystyrene 1683 to the narrow standard column calibration results from the narrow standards calibration curve using in-house software. The molecular weight data for off-set determination was obtained in a manner consistent with that published by Zimm (Zimm, B.H., J.Chem. Phys., 16, 1099 (1948)) and Kratochvil (Kratochvil, P., Classical Light Scattering from Polymer Solutions, Elsevier, Oxford, NY (1987)). The overall injected concentration, used for the determination of the molecular weight, was obtained from the sample infra-red area, and the infra-red detector calibration from a linear polyethylene homopolymer of 115,000 molecular weight. The chromatographic concentrations were assumed low enough to eliminate addressing 2nd Virial coefficient effects (concentration effects on molecular weight).

The calculations of Mn were based on GPC results using the IR4 detector, and the number average molecular weights were determined from the following equation:

$$\overline{Mn} = \frac{\sum\limits^{i} IR_i}{\sum\limits^{i} \left( IR_i \Big/ M_{calibration_i} \right)} \quad (4).$$

The calculations of Mw were based on Absolute GPC molecular weight results using the 15 degree light scattering and the IR4 detectors, and determined from the following equation:

$$\overline{Mw} = \frac{\sum\limits^{i} \left( IR_i * M_{lightscattering_i} \right)}{\sum\limits^{i} IR_i} \quad (5).$$

The calculations of Mz and Mz+1 were done with the method proposed by Yau and Gillespie, Polymer, 42, 8947-8958 (2001), and determined from the following equations:

$$\overline{Mz} = \frac{\sum_{i}^{i}(LS_i * Mcalibration_i)}{\sum_{i}(LS_i)} \quad (6) \quad \overline{Mz^{+1}} = \frac{\sum_{i}^{i}(LS_i * Mcalibration_i^2)}{\sum_{i}(LS_i * Mcalibration_i)}$$

$$(7),$$

where $LS_i$ is the 15 degree LS signal, and the Mcalibration is as described previously using the method of Williams and Ward.

In order to monitor the deviations over time, which may contain an elution component (caused by chromatographic changes) and a flow rate component (caused by pump changes), a late eluting narrow peak is generally used as a "marker peak". A flow rate marker was therefore established based on decane flow marker dissolved in the eluting sample. This flow rate marker was used to linearly correct the flow rate for all samples by alignment of the decane peaks. Any changes in the time of the marker peak are then assumed to be related to a linear shift in both flow rate and chromatographic slope.

The preferred column set is of 13 micron particle size and "mixed" porosity to adequately separate the highest molecular weight fractions appropriate to the claims.

The plate count for the chromatographic system (based on eicosane as discussed previously) should be greater than 32,000, and symmetry should be between 1.00 and 1.12.

Differential Scanning Calorimetry

Differential Scanning Calorimetry (DSC) was performed on a TA Instruments Q1000 DSC, equipped with an RCS cooling accessory and an auto sampler. A nitrogen purge gas flow of 50 ml/min was used. The sample was pressed into a thin film, and melted in the press at about 190°C, and then air-cooled to room temperature (25°C). About 3-10 mg of material was then cut, accurately weighed, and placed in a light aluminum pan (ca 50 mg), which was later crimped shut. The thermal behavior of the sample was investigated with the following temperature profile: the sample was rapidly heated to 230°C, and held isothermal for three minutes, in order to remove any previous thermal history. The sample was then cooled to -40°C at 10°C/min cooling rate, and held at -40 °C for three minutes. The sample was then heated to 190°C at 10°C/min heating rate. The cooling and second heating curves were recorded. The percent crystallinity was calculated by dividing the heat of fusion ($H_f$), determined from the second heat curve, by a theoretical heat of fusion of 292 J/g for PE, and multiplying this quantity by 100 (for example, % cryst. = ($H_f$/292 J/g) x 100). The melting point(s) (Tm) of each interpolymer sample was determined from the second heat curve, obtained from DSC, as described above. The crystallization temperature (Tc) was measured from the first cooling curve.

Melt Index and Density

Melt index, $I_2$, in g/10 min, was measured using ASTM D-1238, Condition 190°C/2.16 kg.

The high load melt index, HLMI or $I_{21}$, refers to a melt index, in "g/10 min," measured using ASTM D-1238, Condition 190°C/21.6 kg.

Density is measured in accordance with ASTM D-792.

Brookfield Viscosity

The viscosities for the HDPE wax components were measured according to ASTM D 3236-88 (350°F (177°C)) on a Brookfield LVDVII+ with Thermosel and disposable aluminum sample chambers (filled with 8-9 grams of HDPE wax). By convention, the viscosities of the HDPE waxes are reported at 177°C. The spindle was a SC-31 hot-melt spindle, suitable for measuring viscosities in the range from 30 to 100,000 cP. A cutting blade was employed to cut samples into pieces small enough to fit into the 1 inch wide, 5 inches long sample chamber. The sample was placed in the chamber, which was, in turn, inserted into a Brookfield Thermosel, and locked into place with bent needle-nose pliers. The sample chamber had a notch on the bottom that fit the bottom of the Brookfield Thermosel to ensure that the chamber was not allowed to turn when the spindle was inserted and spinning.

The sample was heated to the desired temperature (177°C), with additional sample being added, until the melted sample was about 1 inch below the top of the sample chamber. The viscometer apparatus was lowered, and the spindle submerged into the sample chamber. Lowering was continued until brackets on the viscometer align on the Thermosel. The viscometer was turned on, and set to a shear rate which led to a torque reading in the range of 30 to 60 percent. Readings were taken every minute for about 15 minutes, or until the values stabilized, at which time the final reading was recorded.

Extrudate Swell Test

Extrudate swell testing was used to evaluate the average extrudate swell of a polymer strand leaving the die of an extruder, in a range of time representative of a manufacturing process, such as blow molding process. A strand of polymer was produced by a piston-driven capillary rheometer (Göttfert Rheograph 2003 equipped with a 12 mm diameter barrel and a 1 mm circular die of length 10 mm, with a 90° entrance angle) at shear rates of 1000 s$^{-1}$. The volumetric flow rate was kept constant. The strand was cut 4 cm under the die, and a timer was started. When the strand reached a total length of 27 cm (namely an incremental length of 23 cm after the timer started), the timer was stopped. High swell materials produced thicker extrudates, whose length grew more slowly that that of lower swell materials. The recorded time for the strand to reach the incremental length of 23 cm related to the weight swell. The experiment was repeated seven times, to account for statistical variability, and the average result was reported. The extrudate swell is herein reported as the time, $t_{1000}$ seconds, required for the extrudate to cover the distance of 23 cm when extruded at a shear rate of 1000 s$^{-1}$.

Notched Constant Ligament Stress Test

Notched Constant Ligament Stress (NCLS) testing was carried out in accordance with ASTM F2136-01: "The Standard Test Method for Notched Constant Ligament Stress Test to Determine Slow Crack Growth Resistance of HDPE Resins or HDPE Corrugated Pipe." The test method is used to evaluate the susceptibility of high-density polyethylene (HDPE) resins to slow crack growth, when undergoing a constant ligament stress in an accelerating environment. The NCLS testing was carried out in a CS-170 Stress Rupture Tester (available from Custom Scientific Inc.), by subjecting a dumbbell shaped, notched test specimen to a 15 percent ligament stress, in the presence of a 10 percent solution of IGEPAL CO-630 (available from Rhone-Poulec), at 50°C. This test method measures the failure time associated with a given test specimen. Results are reported as the average failure time for five samples.

The compositions of the invention and their uses are more fully described by the following examples. The following examples are provided for the purpose of illustrating the invention, and are not to be construed as limiting the scope of the invention.

13C NMR - Comonomer Content

The comonomer content was determined by 13C NMR. The samples were prepared by adding approximately 3 g of a 50/50 mixture of tetrachloroethane-d2/orthodichlorobenzene, which is 0.025 M in chromium acetylacetonate (relaxation agent), to 0.4 g sample in a 10 mm NMR tube. The samples were dissolved, and homogenized by heating the tube and its contents to 150°C. The data was collected using a Varian Unity Plus 400 MHz spectrometer, or a JEOL Eclipse 400 MHz spectrometer, corresponding to a 13C resonance frequency of 100.4 MHz. Acquisition parameters were selected to ensure quantitative 13C data acquisition in the presence of the relaxation agent. The data was acquired using gated 1H decoupling, 4000 transients per data file, a 6sec pulse repetition delay, spectral width of 24,200Hz, and a file size of 65K data points, with the probe head heated to 130°C.

The comonomer incorporation was determined using ASTM D5017-91 - Standard Test Method for Determination of Linear Low Density Polyethylene (LLDPE) Composition by Carbon-13 Nuclear Magnetic Resonance. Samples that are prepared with a chromium catalyst can be analyzed using Brandolini's assignments for ethylenehexene [Brandolini, A. J., Hills, D. D., "NMR Spectra of Polymers and Polymer Additives", 64 (2000)].

EXPERIMENTAL

The following polymers, as listed in Table 1, were used in the compositions as described below.

Table 1: Description of Blend Components

| Type of Component | D g/cm³ | Mw (g/mol) | Mw/Mn | Mz | MI (I₂) g/ 10min | I₂₁/I₂ | Comon wt% NMR | Melt Visc. mPa·s | Mz/Mw |
|---|---|---|---|---|---|---|---|---|---|
| Resin DM | 0.9530 | 126,170 | 13.9 | 774,300 | 0.30 | 100 | 0.7 | - | 6.14 |
| HMW Copoly. A | 0.9220 | 522,700 | 2.4 | 1,101,000 | - | - | 0.7 | - | 2.11 |
| HDPE Wax B | 0.9749 | 2,460 | 1.3 | - | - | - | 0 | 28 | - |
| Resin DG | 0.9525 | 213,400 | 15.7 | 1,430,900 | 0.21 | 93.6 | - | - | 6.71 |

Resin DM is a high density ethylene/1-hexene interpolymer, prepared in a gas-phase reactor using a chromium catalyst. This interpolymer is a heterogeneously branched linear polymer.

Resin DG is a high density ethylene/1-hexene interpolymer, prepared in a gas-phase reactor using a chromium catalyst

The high molecular weight copolymer (HMW Copolymer A) is an ethylene/1-hexene interpolymer, prepared in a batch reactor using a constrained geometry catalyst. This interpolymer is a homogeneously branched substantially linear polymer.

The high density polyethylene wax (HDPE Wax B) is POLYWAX 2000 (homopolymer), available from Baker Chemicals.

The blends in the studies below were prepared in solution using the following procedure. Blend components were dissolved in o-xylene at 130°C (60-120 minutes) inside a stainless steel reactor (blanketed with nitrogen). Antioxidants, Irganox® 1010 (1000 ppm, Ciba Speciality Chemicals) and Irgafos® 176 (1000 ppm, Ciba Speciality Chemicals), were added to the solution (ppm per amount of solvent). The blends were prepared in 50-75 gram batches to make a total of 100-150 grams total resin. The high molecular weight component was pulverized for better dissolution and blending.

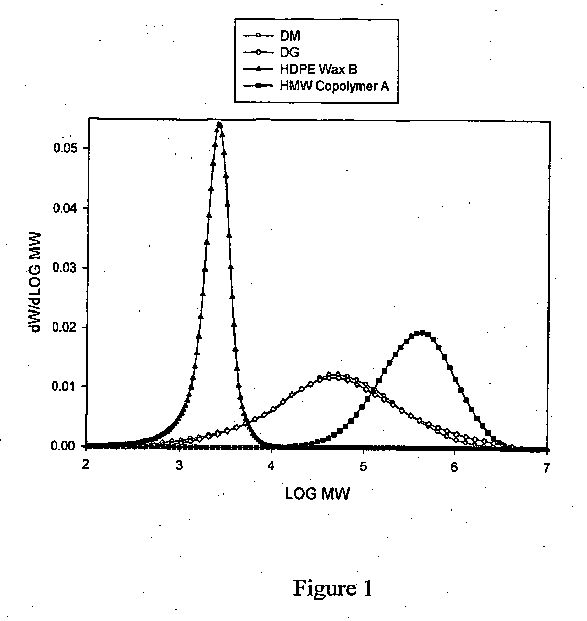

The GPC profiles of these individual polymers are shown in Figure 1. The GPC profiles of the resin compositions, as discussed below, indicate that the polymer components were well blended.

Experiment 1 - Modification of Resin DM with HMW Copolymer A

Resin compositions are listed in Table 2, below.

Table 2: Resin compositions

| Resin Composition | Density (g/cm³) | NCLS (h) | Swell (t1000, s) | Mw | Mw/Mn | Mz |
|---|---|---|---|---|---|---|
| Resin DM | 0.9544 | 22.4 | 7.1 | 126170 | 13.2 | 774,300 |
| 5%/95% HMW Copolymer A /Resin DM | 0.9529 | 57.4 | 6.5 | 146060 | 16.3 | 920,800 |
| 12.5%/87.5% HMW Copolymer A /Resin DM | 0.9489 | +167 (No Break) | 5.5 | 194660 | 19.6 | 1,104,000 |
| 20%/80% HMW Copolymer A /Resin DM | 0.9462 | No Break | 4.7 | 240700 | 17.0 | 1,146,500 |
| HMW Copolymer A | 0.9220 | - | - | 522700 | 2.4 | 1,101,000 |

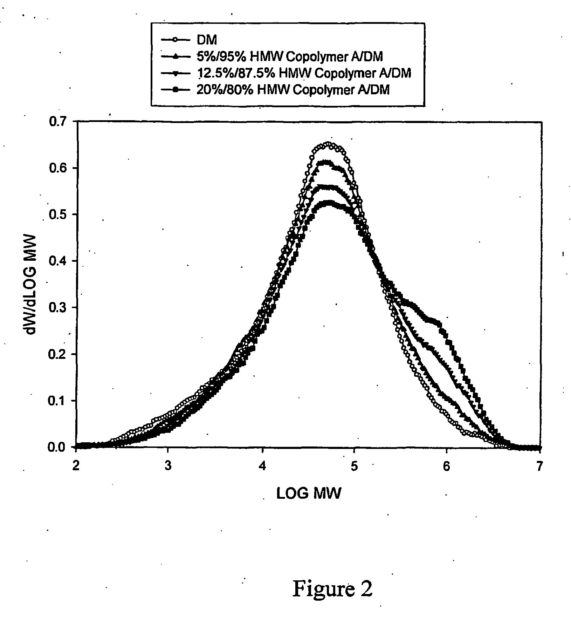

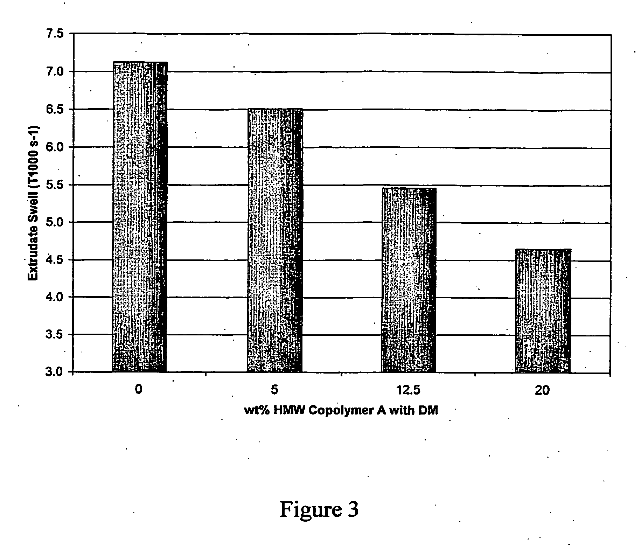

The GPC profiles of the compositions are shown in Figure 2. The weight average molecular weight increased and the density decreased, with increased amount of HMW Copolymer A, as shown in Table 2. Swell analysis by the "extrudate swell method" also showed a decrease in extrudate swell with increasing amounts of this high molecular weight copolymer, as also shown in Table 2. This result is unexpected, and opposite of the trend observed in Experiment 3, as discussed below. Extrudate swell results are also depicted in Figure 3.

EP 1 940 942 B1

Experiment 2 - Modification of Resin DM with HDPE Wax B

Resin compositions are listed in Table 3, below.

Table 3: Resin compositions

| Resin Composition | Density (g/cm³) | Swell (t1000, s) | Mw | Mw/Mn | Mz |
|---|---|---|---|---|---|
| Resin DM | 0.9544 | 7.1 | 126170 | 13.2 | 774,300 |
| 5%/95% HDPE Wax B/Resin DM | 0.9589 | 7.3 | 123010 | 14.3 | 761,900 |
| 12.5%/95% HDPE Wax B/Resin DM | 0.9618 | 7.5 | 113940 | 16.2 | 781,900 |
| 20%/80% HDPE Wax B/Resin DM | 0.9635 | 7.6 | 100480 | 18.5 | 729,400 |

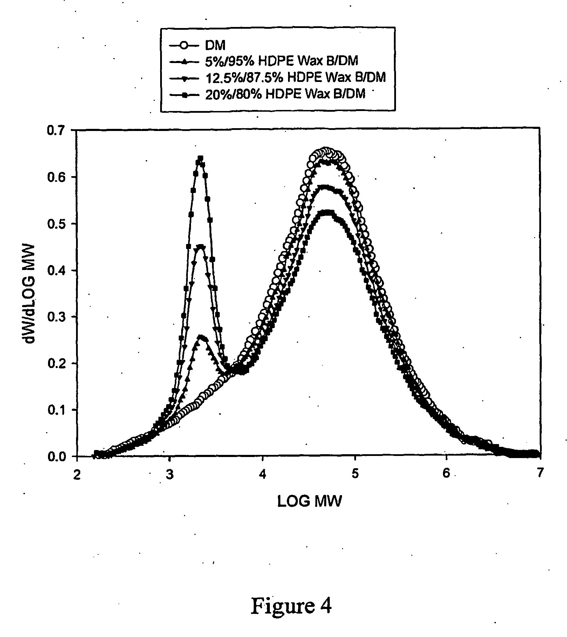

The GPC profiles of the compositions are shown in Figure 4. With increased amount of HDPE Wax B, the density increased, as shown in Table 3. Extrudate swell increased slightly with the increase in the amount of wax, as also shown in Table 3.

Experiment 3 - Modification of Resin DM with Resin DG

Resin compositions are listed in Table 4, below.

Table 4: Resin compositions

| Resin Composition | Swell (t1000, s) | Mw | Mw/Mn | Mz |
|---|---|---|---|---|
| Resin DM | 7.1 | 126170 | 13.1 | 774,300 |
| 25%/75% DG/DM | 7.9 | 145140 | 15.4 | 1,013,100 |
| 50%/50% DG/DM | 8.5 | 163660 | 15.2 | 1,133,800 |
| 75%/25% DG/DM | 9.2 | 183750 | 16.4 | 1,319,300 |
| Resin DG | 9.5 | 213400 | 9.5 | 1,430,900 |

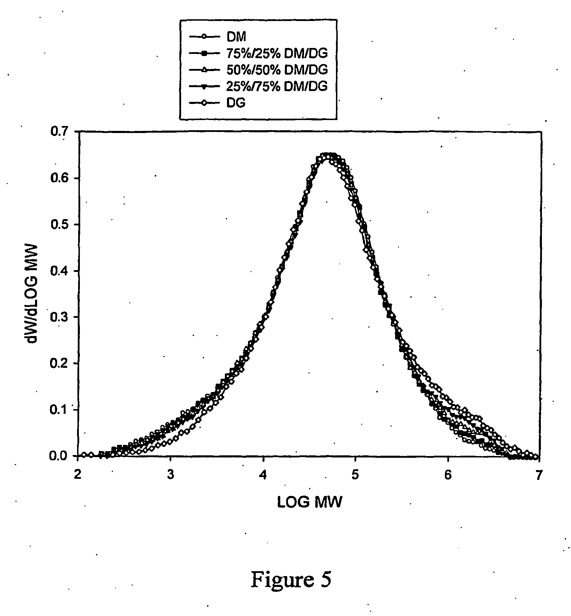

The GPC profiles of the blends are shown in Figure 5. Both the weight average molecular weight and swell increased with increasing amounts of Resin DG, as shown in Table 4. Swell analysis by the "extrudate swell method" also showed an increase in extrudate swell with increasing amounts of Resin DG, as shown in Table 4. This result is in accordance with conventional observations.

Experiment 4 - Triblends (High Density/High MW/Wax)

Resin compositions are listed in Table 5, below.

Table 5; Resin compositions

| Resin Composition | Density (g/cm³) | NCLS (h) | Swell (t1000, s) | Mw | Mw/Mn | Mz |
|---|---|---|---|---|---|---|
| Resin DM | 0.9544 | 22.4 | 7.1 | 126170 | 13.2 | 774,300 |
| 5%/90%/5% HDPE Wax B/Resin DM/HMW Copolymer A | 0.9532 | 47.7 | 6.9 | 139300 | 17.2 | 935,100 |
| 12.5%/75%/12.5% HDPE Wax B/DM/HMW Copolymer A | 0.9552 | +167 (No Break) | 5.2 | 182860 | 22.9 | 1,107,800 |
| HMW Copolymer A | 0.9220 | - | - | 522700 | 2.4 | 1,101,000 |

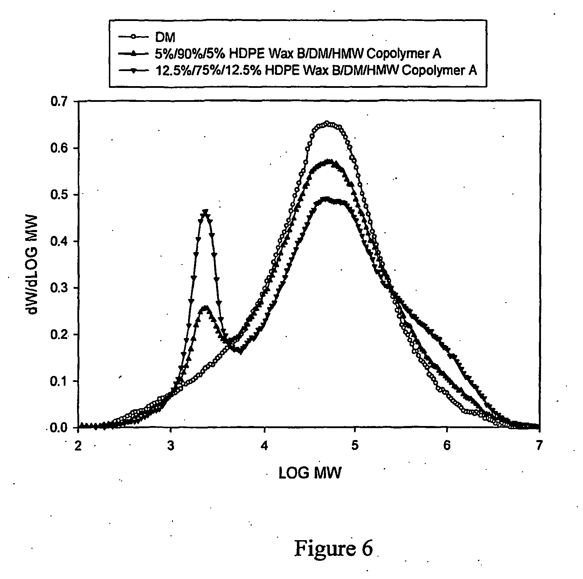

The GPC profiles of the blends are shown in Figure 6. Both the weight average molecular weight and the density increased with increased amount of HMW Copolymer A, as shown in Table 5. On average, the High Density/High MW/Wax composition density was equivalent to that of Resin DM. The extrudate swell results of the resin compositions were lower than the swell of the base polymer (Resin DM). This trend follows the trend seen in Experiment 1 (the addition of high molecular weight copolymer component was shown to lower the swell).

Summary of Molecular Weight - Swell Relationships

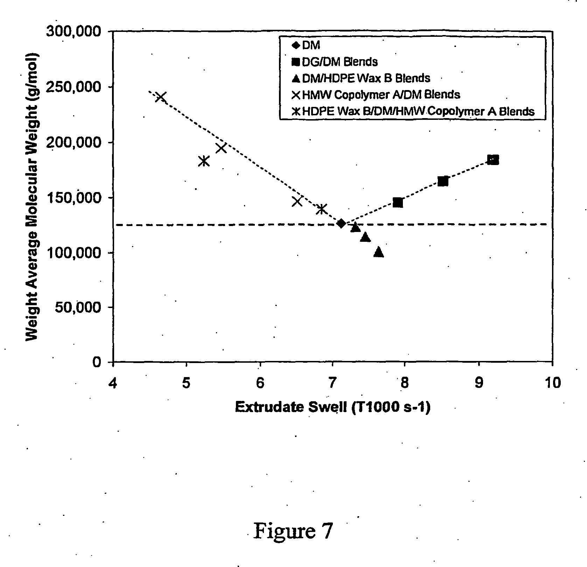

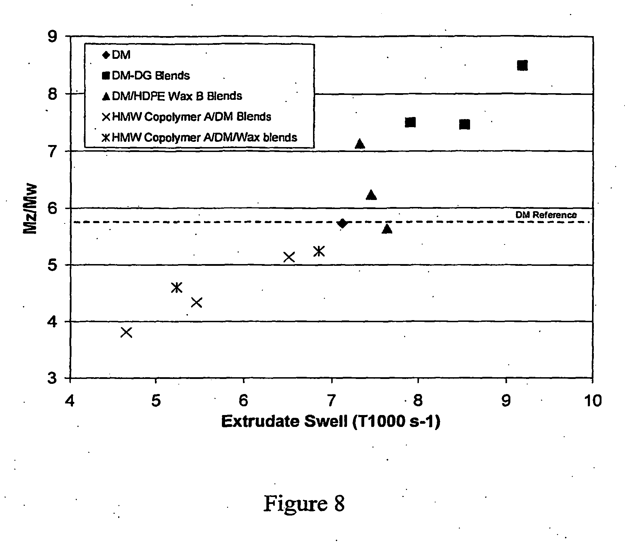

Figure 7 provides a representation of the "molecular weight versus extrudate swell" for the resin compositions, as discussed above. As can be seen by this figure, the swell behavior of the solution blended resins is unique, when the high molecular weight copolymer component is added. As observed, the swell decreases, as opposed to increasing, with the addition of the high molecular weight component, despite the increase in the amount of high molecular weight GPC tail. The conventional blend (Resin DM/Resin DG) increased in swell, as the amount of the high molecular weight component increased (high molecular weight GPC tail also increased). These results indicate that the swell behavior is dependent not on the presence of a high molecular weight GPC tail, but on the shape of such a tail, with a greater dependence on the Mz value of the added resin, as opposed to the Mw value. Figure 8 is a plot of the molecular weight ratio, Mz/Mw, versus extrudate swell for several resins.

DSC Study

DSC results are shown in Table 6.

Table 6: DSC Results

| Resin Composition | First Cool Tc (°C) | First Cool ΔH cryst (J/g) | Second Heat Tm (°C) | Second Heat ΔH melt (J/g) |
|---|---|---|---|---|
| Resin DM | 117.56 | 201.9 | 130.59 | 208 |
| Resin DG | 118.08 | 203.6 | 130.69 | 207.5 |
| 25%/75% Resin DG/resin DM | 117.47 | 199.3 | 130.53 | 204 |
| 50%/50% Resin DG/Resin DM | 117.46 | 201.2 | 130.26 | 208.9 |
| 75%/25% Resin DG/Resin DM | 116.97 | 190.3 | 130.55 | 196.3 |
| 5%/95% HDPE Wax B/Resin DM | 117.91 | 211.7 | 130.06 | 218 |
| 12.5%/95% HDPE Wax B/ResinDM | 117.34 | 217.8 | 130.14 | 224.4 |
| 20%/80% HDPE Wax B/Resin DM | 117.85 | 228.6 | 129.53 | 228.3 |
| 5%/95% HMW Copolymer A / Resin DM | 117.39 | 203.9 | 131.1 | 204.6 |
| 12.5%/87.5% HMW Copolymer A / Resin DM | 117.22 | 198.8 | 130.55 | 195.6 |
| 20%/80% HMW Copolymer A / Resin DM | 116.9 | 193.1 | 130.66 | 189.7 |
| 5%/90%/5% HDPE Wax B/ResinDM/HMW Copolymer A | 117.55 | 208 | 130.4 | 205.2 |
| 12.5%/75%/12.5% HDPE Wax B/Resin DM/HMW Copolymer A | 117.23 | 212 | 130.27 | 209.7 |

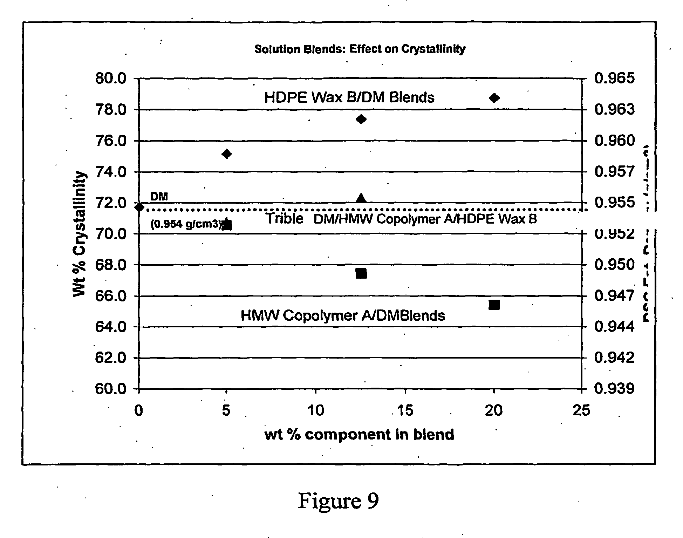

From the weight percent of crystallinity, measured from the enthalpy of melting, a calibration curve was prepared to predict the density of the blends, as shown in Figure 9. The calibration curve was based on a series of commercial HDPE resins (blow molding). As shown in Figure 9, the weight percent crystallinity of the "Polywax Blends" increased with increased amount of HDPE Wax B (density = 0.97 g/cm$^3$). For the "HMW Copolymer Blends," the presence of the high molecular weight component (0.922 g/cm$^3$) lowered the weight percent crystallinity of the blend. However, the triblends containing both the high molecular weight component and the HDPE wax, had similar levels of crystallinity as the base resin (Resin DM). This is a unique result, since the resins (Resin DM and HMW Copolymer A) have different molecular weight distributions and comonomer distributions (and thus, one would typically expect a much lower crystallinity in the blend). This result indicates that the level of crystallinity can be balanced by the addition of the polyethylene wax to a composition containing both the high and low molecular weight components.

The effect of the HDPE Wax B on the crystallinity is slightly stronger than the effect of the HMW Copolymer A. These results allow for the modification of the molecular weight distributions, Mz/Mw and Mw/Mn, and the comonomer distribution in a blend, while maintaining a density similar to that of the high density ethylene polymer resin.

Notched Constant Ligament Stress (NCLS) Study

The NCLS results are shown in Table 7. As can be seen from Table 7, the inventive compositions have average failure times greater than 40 hours.

Table 7: NCLS Results[*]

| Resin Composition | # of samples tested (n) | Avg. failure time (h) [± std dev] |
|---|---|---|
| Resin DM | 5 | 22.4 [9.6] |
| 5%/95% A / Resin DM HMW Copolymer A / Resin DM | 5 | 57.4 [4.3] |
| 12.5%/87.5% HMW Copolymer A / Resin DM | 5 | **NB |
| 20% / 80% HMW Copolymer A / Resin DM | 5 | **NB |
| 5%/90%/5% HDPE Wax B/Resin DM/HMW Copolymer A | 5 | 47.8 [10.5] |
| 12.5%/75%/12.5% HDPE Wax B / Resin DM / HMW Copolymer A | 5 | **NB |
| [*]Measured at 15% stress [**]NB = No break after 167 hours | | |

Effect of the Inventive Compositions on Blow Moulding Properties

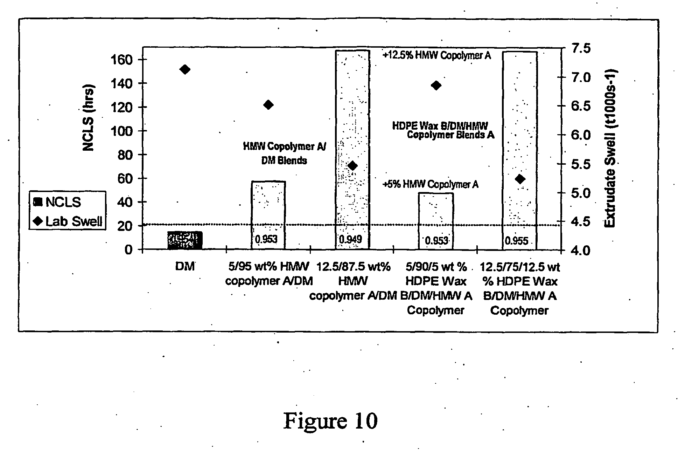

The effect of the above compositions on key blow molding properties are shown in Figure 10. As shown in this figure, the addition of the high molecular copolymer significantly increases the average NCLS failure time. At 5 wt% of this component, the NCLS failure time increased, 2-3 times the NCLS value of the base resin (Resin DM). At 12.5 wt% of this component, the test sample did not break after 167 hours, at which time the test was stopped.

Also, the High Density/High MW/Wax blends exhibited a similar NCLS performance, and in addition, the swell behavior of these resins was lower than the base resin (Resin DM). The weight percent crystallinity of the triblends were similar to that of Resin DM. As discussed above, the inventive triblends provide a way to maintain density, while increasing NCLS failure times and lowering resin swell.

The blending of these components has applications in maintaining bottle top load, increasing ESCR and reducing or maintaining bottle weight swell.

As shown, the addition of the HDPE wax did not greatly affect the swell or NCLS values, however, this addition provided an increase in final resin density.

The swells of the "5 wt% resins," in all cases, were lower than the swell attributed to Resin DM, and these resins achieved a much higher NCLS failure time. The addition of the high molecular weight copolymer increased the NCLS dramatically. No NCLS failures after 167 hours of testing were observed for the "12.5 wt% resins."

**Claims**

1. A composition comprising a high density ethylene polymer and a high molecular weight ethylene polymer, and wherein the high density ethylene polymer has a density greater than the density of the high molecular weight ethylene polymer, and

   the high molecular weight ethylene polymer has a weight average molecular weight greater than the weight average molecular weight of the high density ethylene polymer, and

   wherein the high density ethylene polymer has a density from 0.94 $g/cm^3$ to 0.98 $g/cm^3$, and a molecular weight distribution, Mw/Mn, greater than 8, and

   the high molecular weight ethylene polymer has a weight average molecular weight greater than 200,000 g/mole, and a molecular weight ratio, Mz/Mw, less than 5.

2. The composition of Claim 1, wherein the composition has a HLMI greater than 20 g/10 min.

3. The composition of Claim 1, wherein the high density ethylene polymer has a density from 0.94 $g/cm^3$ to 0.97 $g/cm^3$.

4. The composition of Claim 1, wherein the high molecular weight ethylene polymer has a weight average molecular weight greater than 300,000 g/mole.

5. The composition of Claim 1, wherein the high molecular weight ethylene polymer has a molecular weight distribution, Mw/Mn, less than 5.

6. The composition of Claim 1, wherein the composition has a HLMI greater than 25 g/10 min.

7. The composition of Claim 1, wherein the high molecular weight ethylene polymer has a density from 0.90 $g/cm^3$ to 0.94 $g/cm^3$.

8. The composition of Claim 1, wherein the high molecular weight ethylene polymer has a density from 0.90 $g/cm^3$ to 0.93 $g/cm^3$.

9. The composition of Claim 1, wherein the high molecular weight ethylene polymer has a density from 0.90 $g/cm^3$ to 0.92 $g/cm^3$.

10. The composition of Claim 1, wherein the high molecular weight ethylene polymer has a weight average molecular weight greater than 400,000 g/mole.

11. The composition of Claim 1, wherein the high molecular weight ethylene polymer has a weight average molecular weight greater than 500,000 g/mole.

12. The composition of Claim 1, wherein the high density ethylene polymer has a density from 0.945 $g/cm^3$ to 0.965 $g/cm^3$.

13. The composition of Claim 1, wherein the high density ethylene polymer has a molecular weight distribution, Mw/Mn, greater than 10.

14. The composition of Claim 1, wherein the high molecular weight ethylene polymer is an ethylene/$\alpha$-olefin interpolymer.

15. The composition of Claim 14, wherein the $\alpha$-olefin is a $C_3$-$C_{20}$ olefin.

16. The composition of Claim 1, wherein the high molecular weight ethylene polymer is present in an amount less than, or equal, to 20 weight percent, based on the total weight of the composition.

17. The composition of Claim 1, wherein the composition has a density greater than, or equal to, 0.94 $g/cm^3$.

18. The composition of Claim 1, further comprising a low molecular weight ethylene polymer with a weight average molecular weight from 500 to 20,000 g/mole.

19. The composition of Claim 1, wherein the composition has an extrudate swell, which is less than the extrudate swell of a composition that contains all of the same components, except the high molecular weight ethylene polymer.

20. The composition of Claim 19, wherein the composition has an NCLS failure time, greater than the NCLS failure time of a composition that contains all of the same components, except the high molecular weight ethylene polymer.

21. The composition of Claim 18, wherein the composition has an extrudate swell, which is less than the extrudate swell of a composition that contains all of the same components, except the high molecular weight ethylene polymer.

22. The composition of Claim 21, wherein the composition has an NCLS failure time, greater than the NCLS failure time of a composition that contains all of the same components, except the high molecular weight ethylene polymer.

23. The composition of Claim 19, wherein the composition has an extrudate swell that is 95 percent, or less, of the extrudate swell resulting from a composition that contains all of the same components, except the high molecular weight ethylene polymer.

24. The composition of Claim 21, wherein the composition has an extrudate swell that is 95 percent, or less, of the extrudate swell resulting from a composition that contains all of the same components, except the high molecular weight ethylene polymer.

25. The composition of Claim 23, wherein the composition has an NCLS failure time greater than 40 hours.

26. The composition of Claim 24, wherein the composition has an NCLS failure time greater than 40 hours.

27. A composition of Claim 1, wherein the high molecular weight ethylene polymer has a molecular weight ratio, Mz/Mw, from 1.2 to 5.

28. The composition of Claim 27, wherein the high molecular weight ethylene polymer has a molecular weight distribution, Mw/Mn, from 1.2 to 5.

29. A composition of Claim 1, wherein the high molecular weight ethylene polymer has long chain branching.

30. The composition of Claim 29, wherein the high molecular weight ethylene polymer has a molecular weight distribution, Mw/Mn, less than 5.

31. The composition of Claim 29, wherein the high molecular weight ethylene polymer has 0.01 to 1 long chain branches per 1000 carbon atoms.

32. An article prepared from the composition of Claim 1.

33. An article prepared from the composition of Claim 27.

34. An article prepared from the composition of Claim 29.

**Patentansprüche**

1. Zusammensetzung, die ein Ethylenpolymer hoher Dichte und ein Ethylenpolymer von hohem Molekulargewicht umfasst, und wobei

das Ethylenpolymer hoher Dichte eine Dichte hat, die größer ist als die Dichte des Ethylenpolymers von hohem Molekulargewicht, und

das Ethylenpolymer von hohem Molekulargewicht ein gewichtsgemitteltes Molekulargewicht hat, das größer ist als das gewichtsgemittelte Molekulargewicht des Ethylenpolymers hoher Dichte, und

wobei das Ethylenpolymer hoher Dichte eine Dichte von 0,94 g/cm$^3$ bis 0,98 g/cm$^3$ und eine Molekulargewichtsverteilung, Mw/Mn, größer als 8 hat, und

das Ethylenpolymer von hohem Molekulargewicht ein gewichtsgemitteltes Molekulargewicht größer als 200.000 g/mol und ein Molekulargewichtsverhältnis, Mz/Mw, kleiner als 5 hat.

2. Zusammensetzung nach Anspruch 1, wobei die Zusammensetzung einen HLMI größer als 20 g/10 min hat.

3. Zusammensetzung nach Anspruch 1, wobei das Ethylenpolymer hoher Dichte eine Dichte von 0,94 g/cm$^3$ bis 0,97 g/cm$^3$ hat.

4. Zusammensetzung nach Anspruch 1, wobei das Ethylenpolymer von hohem Molekulargewicht ein gewichtsgemitteltes Molekulargewicht größer als 300.000 g/mol hat.

5. Zusammensetzung nach Anspruch 1, wobei das Ethylenpolymer von hohem Molekulargewicht eine Molekulargewichtsverteilung, Mw/Mn, kleiner als 5 hat.

6. Zusammensetzung nach Anspruch 1, wobei die Zusammensetzung einen HLMI größer als 25 g/10 min hat.

7. Zusammensetzung nach Anspruch 1, wobei das Ethylenpolymer von hohem Molekulargewicht eine Dichte von 0,90 g/cm$^3$ bis 0,94 g/cm$^3$ hat.

8. Zusammensetzung nach Anspruch 1, wobei das Ethylenpolymer von hohem Molekulargewicht eine Dichte von 0,90 g/cm$^3$ bis 0,93 g/cm$^3$ hat.

9. Zusammensetzung nach Anspruch 1, wobei das Ethylenpolymer von hohem Molekulargewicht eine Dichte von 0,90 g/cm$^3$ bis 0,92 g/cm$^3$ hat.

10. Zusammensetzung nach Anspruch 1, wobei das Ethylenpolymer von hohem Molekulargewicht ein gewichtsgemitteltes Molekulargewicht größer als 400.000 g/mol hat.

11. Zusammensetzung nach Anspruch 1, wobei das Ethylenpolymer von hohem Molekulargewicht ein gewichtsgemitteltes Molekulargewicht größer als 500.000 g/mol hat.

12. Zusammensetzung nach Anspruch 1, wobei das Ethylenpolymer hoher Dichte eine Dichte von 0,945 g/cm$^3$ bis 0,965 g/cm$^3$ hat.

13. Zusammensetzung nach Anspruch 1, wobei das Ethylenpolymer hoher Dichte eine Molekulargewichtsverteilung, Mw/Mn, größer als 10 hat.

14. Zusammensetzung nach Anspruch 1, wobei das Ethylenpolymer von hohem Molekulargewicht ein Ethylen/a-Olefin-Interpolymer ist.

15. Zusammensetzung nach Anspruch 14, wobei das $\alpha$-Olefin ein C$_3$-C$_{20}$-Olefin ist.

16. Zusammensetzung nach Anspruch 1, wobei das Ethylenpolymer von hohem Molekulargewicht in einer Menge von kleiner oder gleich 20 Gewichtsprozent vorliegt, bezogen auf das Gesamtgewicht der Zusammensetzung.

17. Zusammensetzung nach Anspruch 1, wobei die Zusammensetzung eine Dichte größer oder gleich 0,94 g/cm$^3$ hat.

18. Zusammensetzung nach Anspruch 1, die ferner ein Ethylenpolymer von niedrigem Molekulargewicht mit einem gewichtsgemittelten Molekulargewicht von 500 bis 20.000 g/mol umfasst.

19. Zusammensetzung nach Anspruch 1, wobei die Zusammensetzung eine Extrudatschwellung besitzt, die geringer ist als die Extrudatschwellung einer Zusammensetzung, die alle diese Komponenten enthält, mit Ausnahme des Ethylenpolymers von hohem Molekulargewicht.

20. Zusammensetzung nach Anspruch 19, wobei die Zusammensetzung eine NCLS-Versagenszeit besitzt, die größer ist als die NCLS-Versagenszeit einer Zusammensetzung, die alle diese Komponenten enthält, mit Ausnahme des Ethylenpolymers von hohem Molekulargewicht.

21. Zusammensetzung nach Anspruch 18, wobei die Zusammensetzung eine Extrudatschwellung besitzt, die geringer ist als die Extrudatschwellung einer Zusammensetzung, die alle diese Komponenten enthält, mit Ausnahme des Ethylenpolymers von hohem Molekulargewicht.

22. Zusammensetzung nach Anspruch 21, wobei die Zusammensetzung eine NCLS-Versagenszeit besitzt, die größer ist als die NCLS-Versagenszeit einer Zusammensetzung, die alle diese Komponenten enthält, mit Ausnahme des Ethylenpolymers von hohem Molekulargewicht.

23. Zusammensetzung nach Anspruch 19, wobei die Zusammensetzung eine Extrudatschwellung besitzt, die 95 Prozent oder weniger der Extrudatschwellung beträgt, die aus einer Zusammensetzung resultiert, die alle diese Komponenten enthält, mit Ausnahme des Ethylenpolymers von hohem Molekulargewicht.

24. Zusammensetzung nach Anspruch 21, wobei die Zusammensetzung eine Extrudatschwellung besitzt, die 95 Prozent oder weniger der Extrudatschwellung beträgt, die aus einer Zusammensetzung resultiert, die alle diese Komponenten enthält, mit Ausnahme des Ethylenpolymers von hohem Molekulargewicht.

25. Zusammensetzung nach Anspruch 23, wobei die Zusammensetzung eine NCLS-Versagenszeit größer als 40 Stunden besitzt.

26. Zusammensetzung nach Anspruch 24, wobei die Zusammensetzung eine NCLS-Versagenszeit größer als 40 Stunden besitzt.

27. Zusammensetzung nach Anspruch 1, wobei das Ethylenpolymer von hohem Molekulargewicht ein Molekulargewichtsverhältnis, Mz/Mw, von 1,2 bis 5 besitzt.

28. Zusammensetzung nach Anspruch 27, wobei das Ethylenpolymer von hohem Molekulargewicht eine Molekulargewichtsverteilung, Mw/Mn, von 1,2 bis 5 besitzt.

29. Zusammensetzung nach Anspruch 1, wobei das Ethylenpolymer von hohem Molekulargewicht eine langkettige Verzweigung besitzt.

30. Zusammensetzung nach Anspruch 29, wobei das Ethylenpolymer von hohem Molekulargewicht eine Molekulargewichtsverteilung, Mw/Mn, kleiner als 5 besitzt.

31. Zusammensetzung nach Anspruch 29, wobei das Ethylenpolymer von hohem Molekulargewicht 0,01 bis 1 langkettige Verzweigung pro 1000 Kohlenstoffatome besitzt.

32. Gegenstand aus der Zusammensetzung nach Anspruch 1.

33. Gegenstand aus der Zusammensetzung nach Anspruch 27.

34. Gegenstand aus der Zusammensetzung nach Anspruch 29.


**Revendications**

1. Composition comprenant un polymère d'éthylène de haute densité et un polymère d'éthylène de haute masse moléculaire, dans laquelle :

   - le polymère d'éthylène de haute densité présente une masse volumique supérieure à celle du polymère d'éthylène de haute masse moléculaire,
   - et le polymère d'éthylène de haute masse moléculaire présente une masse molaire moyenne en poids supérieure à celle du polymère d'éthylène de haute densité,
   et dans laquelle :
   - le polymère d'éthylène de haute densité présente une masse volumique de 0,94 à 0,98 g/cm$^3$ et un indice de distribution des masses moléculaires Mw/Mn supérieur à 8,
   - et le polymère d'éthylène de haute masse moléculaire présente une masse molaire moyenne en poids supérieure à 200 000 g/mol et un rapport de masses molaires moyennes Mz/Mw inférieur à 5.

2. Composition conforme à la revendication 1, laquelle composition présente un indice HLMI (indice de fluidité à l'état fondu sous charge élevée) supérieur à 20 g/10 min.

3. Composition conforme à la revendication 1, dans laquelle le polymère d'éthylène de haute densité présente une masse volumique de 0,94 à 0,97 g/cm$^3$.

4. Composition conforme à la revendication 1, dans laquelle le polymère d'éthylène de haute masse moléculaire présente une masse molaire moyenne en poids supérieure à 300 000 g/mol.

5. Composition conforme à la revendication 1, dans laquelle le polymère d'éthylène de haute masse moléculaire présente un indice de distribution des masses moléculaires Mw/Mn inférieur à 5.

6. Composition conforme à la revendication 1, laquelle composition présente un indice HLMI (indice de fluidité à l'état fondu sous charge élevée) supérieur à 25 g/10 min.

7. Composition conforme à la revendication 1, dans laquelle le polymère d'éthylène de haute masse moléculaire présente une masse volumique de 0,90 à 0,94 g/cm$^3$.

8. Composition conforme à la revendication 1, dans laquelle le polymère d'éthylène de haute masse moléculaire présente une masse volumique de 0,90 à 0,93 g/cm$^3$.

9. Composition conforme à la revendication 1, dans laquelle le polymère d'éthylène de haute masse moléculaire présente une masse volumique de 0,90 à 0,92 g/cm$^3$.

10. Composition conforme à la revendication 1, dans laquelle le polymère d'éthylène de haute masse moléculaire présente une masse molaire moyenne en poids supérieure à 400 000 g/mol.

11. Composition conforme à la revendication 1, dans laquelle le polymère d'éthylène de haute masse moléculaire présente une masse molaire moyenne en poids supérieure à 500 000 g/mol.

12. Composition conforme à la revendication 1, dans laquelle le polymère d'éthylène de haute densité présente une masse volumique de 0,945 à 0,965 g/cm$^3$.

13. Composition conforme à la revendication 1, dans laquelle le polymère d'éthylène de haute densité présente un indice de distribution des masses moléculaires Mw/Mn supérieur à 10.

14. Composition conforme à la revendication 1, dans laquelle le polymère d'éthylène de haute masse moléculaire est un interpolymère d'éthylène et d'alpha-oléfine.

15. Composition conforme à la revendication 14, dans laquelle l'alpha-oléfine est une oléfine en C$_{3-20}$.

16. Composition conforme à la revendication 1, dans laquelle le polymère d'éthylène de haute masse moléculaire se trouve présent en une quantité représentant 20 % ou moins du poids total de la composition.

17. Composition conforme à la revendication 1, laquelle composition présente une masse volumique supérieure ou égale à 0,94 g/cm$^3$.

18. Composition conforme à la revendication 1, qui comprend en outre un polymère d'éthylène de basse masse moléculaire, dont la masse molaire moyenne en poids vaut de 500 à 20 000 g/mol.

19. Composition conforme à la revendication 1, qui présente un gonflement d'extrudat inférieur à celui d'une composition contenant la totalité des mêmes composants, excepté le polymère d'éthylène de haute masse moléculaire.

20. Composition conforme à la revendication 19, laquelle composition présente un temps de rupture en test NCLS (test sur éprouvette entaillée avec contrainte constante au niveau du ligament) plus long que celui d'une composition contenant la totalité des mêmes composants, excepté le polymère d'éthylène de haute masse moléculaire.

21. Composition conforme à la revendication 18, qui présente un gonflement d'extrudat inférieur à celui d'une composition contenant la totalité des mêmes composants, excepté le polymère d'éthylène de haute masse moléculaire.

22. Composition conforme à la revendication 21, laquelle composition présente un temps de rupture en test NCLS (test sur éprouvette entaillée avec contrainte constante au niveau du ligament) plus long que celui d'une composition contenant la totalité des mêmes composants, excepté le polymère d'éthylène de haute masse moléculaire.

23. Composition conforme à la revendication 19, qui présente un gonflement d'extrudat valant au plus 95 % de celui d'une composition contenant la totalité des mêmes composants, excepté le polymère d'éthylène de haute masse moléculaire.

24. Composition conforme à la revendication 21, qui présente un gonflement d'extrudat valant au plus 95 % de celui d'une composition contenant la totalité des mêmes composants, excepté le polymère d'éthylène de haute masse moléculaire.

25. Composition conforme à la revendication 23, laquelle composition présente, dans un test NCLS, un temps de rupture supérieur à 40 heures.

26. Composition conforme à la revendication 24, laquelle composition présente, dans un test NCLS, un temps de rupture supérieur à 40 heures.

27. Composition conforme à la revendication 1, dans laquelle le polymère d'éthylène de haute masse moléculaire présente un rapport de masses molaires moyennes Mz/Mw de 1,2 à 5.

28. Composition conforme à la revendication 27, dans laquelle le polymère d'éthylène de haute masse moléculaire présente un indice de distribution des masses moléculaires Mw/Mn de 1,2 à 5.

29. Composition conforme à la revendication 1, dans laquelle le polymère d'éthylène de haute masse moléculaire présente des ramifications à longue chaîne.

30. Composition conforme à la revendication 29, dans laquelle le polymère d'éthylène de haute masse moléculaire présente un indice de distribution des masses moléculaires Mw/Mn inférieur à 5.

31. Composition conforme à la revendication 29, dans laquelle le polymère d'éthylène de haute masse moléculaire comporte de 0,01 à 1 ramification à longue chaîne pour 1000 atomes de carbone.

32. Article obtenu à partir d'une composition conforme à la revendication 1.

33. Article obtenu à partir d'une composition conforme à la revendication 27.

34. Article obtenu à partir d'une composition conforme à la revendication 29.

Figure 1

Figure 2

Figure 3

Figure 4

Figure 5

Figure 6

Figure 7

Figure 8

Figure 9

Figure 10

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1319685 A
- WO 0015671 A
- JP H11302465 B
- US 6242543 B
- US 5350807 A
- EP 1187876 B1
- US 6426385 B
- EP 0783022 B1
- EP 1141045 B1
- EP 1204523 B1
- EP 0876406 B1
- EP 1304353 A1
- WO 0071615 A
- WO 9407930 A
- WO 0018814 A
- WO 03020821 A
- WO 03016396 A
- US 6841631 B
- US 6787608 B
- US 5408015 A
- US 6632896 B
- US 20040048736 A
- US 20040167015 A
- US 20040242808 A
- US 20040249083 A
- US 4798081 A
- US 5008204 A
- US 5292845 A
- US 5089321 A
- US 5206075 A
- US 5241031 A
- WO 9303093 A
- WO 9003414 A
- US 5272236 A
- US 5278272 A
- US 3645992 A, Elston
- US 4937299 A
- US 5218071 A
- US 5665800 A
- US 20030055176 A
- US 6054544 A
- US 6335410 A
- US 6723810 A
- US 4076698 A, Anderson

**Non-patent literature cited in the description**

- **Wild et al.** *Journal of Polymer Science, Poly. Phys. Ed,* 1982, vol. 20, 441
- **L. D. Cady.** The Role of Comonomer Type and Distribution in LLDPE Product Performance. *SPE Regional Technical Conference, Quaker Square Hilton,* 01 October 1985, 107-119
- **J. C. Randall.** *Rev. Macromol. Chem. Phys.,* vol. C29, 201-317
- **Williams ; Ward.** *J. Polym. Sci., Polym. Let.,* 1968, vol. 6, 621
- **Mourey ; Balke.** *Chromatography Polym. Chpt,* 1992, 12
- **Cheung ; Mourey.** Chromatography Polym. 1992
- **Zimm, B.H.** *J.Chem. Phys.,* 1948, vol. 16, 1099
- **Kratochvil, P.** Classical Light Scattering from Polymer Solutions. Elsevier, 1987
- **Yau ; Gillespie.** *Polymer,* 2001, vol. 42, 8947-8958
- **Brandolini, A. J. ; Hills, D. D.** *NMR Spectra of Polymers and Polymer Additives,* 2000, 64